# EUROPEAN PATENT SPECIFICATION

(11) **EP 3 103 217 B1**
(45) Date of publication and mention of the grant of the patent: **30.10.2019**
(21) Application number: 14713062.9
(22) Date of filing: 18.03.2014
(51) Int. Cl.: H04L 12/26

(54) **MONITORING SYSTEM AND MONITORING METHOD FOR SOFTWARE DEFINED NETWORKS**
ÜBERWACHUNGS-SYSTEM UND -VERFAHREN FÜR SOFTWAREDEFINIERTEN NETZWERKE
SYSTÈME ET PROCÉDÉ DE SURVEILLANCE POUR DES RÉSEAUX DÉFINIS PAR LOGICIEL

(43) Date of publication of application: 14.12.2016
(73) Proprietor: Huawei Technologies Co., Ltd., Longgang Shenzhen, Guangdong 518129 (CN)
(72) Inventor: VAISHNAVI, Ishan, 80992 Munich (DE); GUERZONI, Riccardo, 80992 Munich (DE)
(74) Representative: Gill Jennings & Every LLP
(86) International application number: PCT/EP2014/055380
(87) International publication number: WO 2015/139732

(56) References cited:
- N. Ciulli ET AL: "Generalised Architecture for Dynamic Infrastructure Services / GEYSERS, Deliverable D4.1 GMPLS+/PCE+ Control Plane architecture, Version 1.0", , 30 November 2010 (2010-11-30), pages 1-186, XP055052841, Retrieved from the Internet: URL:http://www.geysers.eu/images/stories/d eliverables/geysers-deliverable_4.1.pdf [retrieved on 2013-02-08]
- CASELLAS R ET AL: "SDN based Provisioning orchestration of OpenFlow/GMPLS flexi-grid networks with a stateful hierarchical PCE", OFC 2014, OSA, 9 March 2014 (2014-03-09), pages 1-3, XP032632841, DOI: 10.1109/OFC.2014.6886802 [retrieved on 2014-08-27]
- "Network Function Virtualization (NFV) Management and Orchestration;NFV-MAN001v033-clean", ETSI DRAFT; NFV-MAN001V033-CLEAN, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, no. V0.3.3, 17 March 2014 (2014-03-17), pages 1-136, XP014182193, [retrieved on 2014-03-17]

## Description

### TECHNICAL FIELD

The present invention relates to a monitoring system and a monitoring method for coordinated monitoring in orchestrated software defined networks. Especially, the present invention relates to a monitoring system and a monitoring method for monitoring of software defined networks, which cover more than one domain.

### BACKGROUND

The development of techniques to embed network appliances into virtual substrates makes the problem of monitoring ICT infrastructures much more complex than in the past. Network functions belonging to both Telco and IT domain can be embedded in data centers and use virtual connectivity provided by Software Defined Networking techniques like e.g. OpenFlow. An architecture for coordination of monitoring in heterogeneous virtual infrastructures is bound to be hierarchical. The virtual infrastructure requested by Virtual Request Owners (VRO) to deploy services will be orchestrated end-to-end across physical substrates operated by different entities.

Physical Infrastructure Providers (PIP) consolidate physical resources, pool them together and expose them as a service to service providers or any other entity that can add value and resell them further.

The role of supervising the PIPs will be taken on by brokers. Brokers provide Virtual Request Owners with a tailored virtual telco infrastructure, exploiting efficiently all physical available infrastructure, regardless their location and/or ownership, and fulfilling Service Level Agreements (SLA). Brokers are a logically defined entity and in practice any one of the PIP may act as a broker for one virtual network request.

Currently, each virtualization domain provides separate monitoring capabilities, but there is no solution for coordinating the monitoring systems to create a "network cloud" monitoring system.

Monitoring of individual monitored devices is therefore already known. A coordination of such a monitoring across various domains in software defined networks is so far not possible.

N. Ciulli ET AL: "Generalised Architecture for Dynamic Infrastructure Services / GEYSERS, Deliverable D4.1 GMPLS+/PCE+ Control Plane architecture, Version 1.0", 30 November 2010 (2010-11-30), pages 1-186, XP055052841 discloses the architecture of the enhanced Network Control Plane to enable joint on-demand network and IT provisioning services over a virtual infrastructure.

Document "Network Function Virtualization (NFV) Management and Orchestration; NFV-MAN001v033-clean", XP014182193, shows a monitoring system and a method, with network function virtualization for network controllers.

### SUMMARY

The objective of the present invention is therefore to provide a monitoring system and a monitoring method for performing monitoring within software defined networks. The further objective of the invention is to provide a monitoring system and a monitoring method so that only a minimal user input is necessary. Especially, the aim of the invention is to allow a monitoring coordination of different components in different physical or technical domains within the software defined network from only one location.

The above objectives are achieved by the solutions provided in the enclosed independent claims. Advantageous implementations are defined in the respective dependent claims.

The first aspect of the present invention provides a monitoring system for a software defined network, SDN, comprising at least one monitored device. The monitoring system comprises at least one monitoring instance, which is a hardware or software monitoring component being connected to and adapted to operate at least one probe for monitoring the at least one monitored device. The monitoring system further comprises a monitoring orchestrator and at least one sub-monitoring orchestrator. The monitoring orchestrator is adapted to determine at least one first parameter to be monitored according to a monitoring request and to orchestrate monitoring the at least one first parameter by sending instructions to the at least one sub-monitoring orchestrator to implement the monitoring requirements. The at least one sub-monitoring orchestrator is adapted to determine at least one second parameter to be monitored according to the at least one first parameter and orchestrate monitoring the at least one second parameter; the system further comprising at least one monitoring server being adapted to determine at least one third parameter to be monitored according to the at least one second parameter, and operate the monitoring instances for monitoring the at least one third parameter by use of the at least one probe. The monitoring system according to the first aspect of the present invention allows for a monitoring of different probes within different monitored devices of the software defined network. By use of the monitoring orchestrator and the sub-monitoring orchestrator, a monitoring of these different monitored devices is possible with very low required user effort.

By monitoring the at least one third parameter. An even greater flexibility of monitoring different parameters can thereby be achieved. Especially, it is possible that the monitoring orchestrator and the sub-monitoring orchestrator do not have to know all details about connected probes.

In a first implementation form of the first aspect of the present invention, the at least one monitored device is a component of the software defined network such as a radio access network controller or a passive optical network controller or a core network controller or a data center cloud manager server. A great deal of different components can therefore be monitored. A great flexibility of use of the monitoring system is therefore possible.

In a second implementation form of the first aspect of the present invention, the monitoring system further comprises a monitoring request generator being adapted to send at least one monitoring request to the monitoring orchestrator. It is therefore possible for a user of the monitoring system to input his monitoring request into a single hardware or software component - the monitoring request generator. Alternatively, the monitoring request generator can be set up for automatically generating the monitoring request and transmitting it to the monitoring orchestrator.

According to a third implementation form of the first aspect of the present invention, the monitoring system comprises a first interface for communicating from the monitoring request generator to the monitoring orchestrator a monitoring request and for communicating from the monitoring orchestrator to the monitoring request generator at least one monitored parameter. By using a defined first interface, it is possible to achieve a great flexibility of use, since different components can easily be interchanged.

According to a fifth implementation form of the first aspect of the present invention, the monitoring orchestrator is embedded in an orchestrator of software defined network for orchestrating multiple physical infrastructure providers of said software defined network. By embedding the monitoring orchestrator in the orchestrator of the software defined network, a number of components can be jointly used by the monitoring system and the software defined network. This allows for a reduction in necessary hardware and software.

According to a sixth implementation form of the first aspect, the monitoring system further comprises at least one second interface for communication between the monitoring orchestrator and the at least one sub-monitoring orchestrator. The second interface is then adapted to communicate from the monitoring orchestrator to the at least one sub-monitoring orchestrator a message for instantiating a probe at a specific location and/or a message for starting a new report, and/or a message for combining a number of probes into one single probe, and/or a message for reconfiguring a probe, and/or a message for configuring an alarm with an alarm condition and/or a message for requesting a report status of a probe, and or a message for moving a probe to a new location and/or a message for authorizing a move of a probe which was previously requested and/or a message for activating a probe and/or a message for deactivating a probe and/or a message for activating probe reporting and/or a message for deactivating probe reporting. The second interface is furthermore then adapted to communicated from the at least one sub-monitoring orchestrator to the monitoring orchestrator a message for raising an alarm in case of a specific alarm condition and/or a message for requesting an authorization for a previously requested move of a probe and/or a message for requesting a move of a probe to a new location. Also by use of the second interface, a great flexibility of construction of the monitoring system can be achieved. Especially, an interoperability of different components can thereby be guaranteed.

According to a seventh implementation form of the first aspect of the present invention, the monitoring system further comprises a third interface for communication between the at least one sub-monitoring orchestrator and the at least one monitoring server. The third interface is adapted to communicate from the at least one sub-monitoring orchestrator to the at least one monitoring server a message for instantiating a probe at a specific location and/or a message for starting a new report of a probe and/or a message for combining a number of probes into one single probe and/or a message for reconfiguring a probe and/or a message for configuring an alarm with an alarm condition and/or a message for requesting a report of a probe and/or a message for checking if an intended move of a probe is supported and/or a message for moving a probe to a new location and/or a message for authorizing a previously requested move request and/or a message for de-instantiating a probe and/or a message for activating a probe and/or a message for deactivating a probe and/or a message for activating probe reporting and/or a message for deactivating probe reporting. The third interface is furthermore adapted to communicate from the at least one monitoring server to the at least one sub-monitoring orchestrator a message for raising an alarm in case of a specific alarm condition and/or a message for requesting an authorization for a previously requested move of a probe and/or a message for requesting a move of a probe to a new location and/or a message for requesting a list of all virtual entities associated to a physical entity and/or a message for requesting a list of all probes associated to a physical entity or a virtual entity. Also a use of the third interface a great flexibility of use of the monitoring system is achieved. Especially an easy interoperability of different applied components can be achieved.

According to an eighth implementation form of the first aspect, the monitoring system furthermore comprises a fourth interface for communication between the at least one monitoring instance and the at least one probe. The fourth interface is adapted to communicate from the at least one monitoring instance to the at least one probe, a message for instantiating the probe and a specific location and/or a message for starting a new report of the probe and/or a message for combining a number of probes into a single probe and/or a message for reconfiguring the probe and or a message for checking if an intended move of the probe is supported and/or a message for moving the probe to a new location and/or a message for de-instantiating the probe and/or a message for activating the probe and/or a message for deactivating the probe and/or a message for activating probe reporting and/or a message for deactivating probe reporting. The fourth interface is moreover adapted to communicate from the at least one probe to the at least one monitoring instance a method for requesting a list of all virtual entities associated to a physical entity and/or a message for requesting a list of all probes associated to a physical entity or a virtual entity. Also the use of the fourth interface allows for a great flexibility of use of the monitoring system. Especially, an easy interoperability of the different components used is achieved.

According to a ninth implementation form of the first aspect of the present invention each monitoring server is allocated to or embedded in one monitored device.

Alternatively or additionally, each monitoring instance is adapted to monitor all parameters to be monitored by at least one probe for one monitored device. Again it is possible to reduce the required hardware and software of the monitoring system and the software defined network, since components can be jointly used.

According to an tenth implementation form of the first aspect, when the at least one monitored device is to be reconfigured, a monitoring server corresponding to said monitored device is adapted to reconfigure the probe allocated to said monitored device while the probe is active or in operation. It is thereby possible to achieve a seamless handover without deactivating the probe.

In an alternative eleventh implementation form of the first aspect, when the at least one monitored device is to be reconfigured, a monitoring server corresponding to a probe allocated to said monitored device is adapted to deactivate the probe, reconfigure the probe and reactivate the probe. Although a seamless handover is thereby not possible, and increased reliability can be achieved.

According to a twelfth implementation form of the first aspect of the monitoring system, the monitoring system furthermore comprises at least one sub-sub-monitoring orchestrator. In this case the at least one sub-monitoring orchestrator is adapted to orchestrate monitoring of the parameters to be monitored by the at least one sub-sub-monitoring orchestrator. The at least one sub-sub-monitoring orchestrator is adapted to orchestrate monitoring of the parameters to be monitored by the at least one monitoring server. By adding this one further hierarchical level, the monitoring system can be adapted to operate in even larger software defined networks spanning different organizations.

As a third aspect of the present invention, a method for operating a monitoring system for monitoring a software defined network is provided. The software defined network comprises at least one monitored device. The method comprises the steps of operating by at least one monitoring instance, at least one probe for monitoring the at least one monitored device, determining, by a monitoring orchestrator, at least one first parameter to be monitored according to a monitoring request, orchestrating, by the monitoring orchestrator, the monitoring the at least one first parameter by sending instructions to the at least one sub-monitoring orchestrator to implement the monitoring requirements, determining by a sub-monitoring orchestrator, at least one second parameter to be monitored according to the at least one first parameter, orchestrating, by the sub-monitoring orchestrator, the monitoring the at least one second parameter; and determining at least one third parameter to be monitored according to the at least one second parameter by the monitoring server and operating the monitoring instances for monitoring the at least one third parameter by the monitoring server. It is thereby possible to perform a monitoring of a great number of different monitored devices without
requiring a great deal of user effort for performing the monitoring.

According to a first implementation form of the third aspect, the at least one monitored device is a component of the software defined network, such as a radio access network controller or a passive optical network controller or a core network controller or a data center of a cloud manager server. Therefore, a great number of different devices can be monitored. A high flexibility is thereby achieved.

According to a second implementation form of the third aspect, a monitoring request is transmitted to the monitoring orchestrator by a monitoring request generator. It is therefore possible for a user to input his monitoring request into or via a central location. Alternatively, the monitoring request generator can automatically generate the monitoring request.

According to a third implementation form of the third aspect, the method uses a first interface for communicating from the monitoring request generator to the monitoring orchestrator a monitoring request, and for communicating from the monitoring orchestrator to the monitoring request generator at least one monitored parameter. By use of this interface, a great flexibility of use can be achieved. Especially, an easy interoperability of different components is achieved.

According to a fifth implementation form of the third aspect, the monitoring method uses a second interface for communicating between the monitoring orchestrator and the at least one sub-monitoring orchestrator. The second interface is adapted to communicate from the monitoring orchestrator to the at least one sub-monitoring orchestrator. The second interface is then adapted to communicate from the monitoring orchestrator to the at least one sub-monitoring-orchestrator a message for instantiating a probe at a specific location and/or a message for starting a new report, and/or a message for combining a number of probes into one single probe, and/or a message for reconfiguring a probe, and/or a message for configuring an alarm with an alarm condition and/or a message for requesting a report status of a probe, and or a message for moving a probe to a new location and/or a message for authorizing a move of a probe which was previously requested and/or a message for activating a probe and/or a message for deactivating a probe and/or a message for activating probe reporting and/or a message for deactivating probe reporting. The second interface is furthermore then adapted to communicated from the at least one sub-monitoring-orchestrator to the monitoring orchestrator a message for raising an alarm in case of a specific alarm condition and/or a message for requesting an authorization for a previously requested move of a probe and/or a message for requesting a move of a probe to a new location. Also by use of the second interface, a great flexibility of construction of the monitoring system can be achieved. Especially, an interoperability of different components can thereby be guaranteed.

According to a sixth implementation form of the third aspect, the method uses a third interface for communication between the at least one sub-monitoring orchestrator and the at least one monitoring server. The third interface is then adapted to communicate from the at least one sub-monitoring orchestrator to the at least one monitoring server. The third interface is adapted to communicate from the at least one sub-monitoring-orchestrator to the at least one monitoring server a message for instantiating a probe at a specific location and/or a message for starting a new report of a probe and/or a message for combining a number of probes into one single probe and/or a message for reconfiguring a probe and/or a message for configuring an alarm with an alarm condition and/or a message for requesting a report of a probe and/or a message for checking if an intended move of a probe is supported and/or a message for moving a probe to a new location and/or a message for authorizing a previously requested move request and/or a message for de-instantiating a probe and/or a message for activating a probe and/or a message for deactivating a probe and/or a message for activating probe reporting and/or a message for deactivating probe reporting. The third interface is furthermore adapted to communicate from the at least one monitoring server to the at least one sub-monitoring-orchestrator a message for raising an alarm in case of a specific alarm condition and/or a message for requesting an authorization for a previously requested move of a probe and/or a message for requesting a move of a probe to a new location and/or a message for requesting a list of all virtual entities associated to a physical entity and/or a message for requesting a list of all probes associated to a physical entity or a virtual entity. Also a use of the third interface a great flexibility of use of the monitoring system is achieved. Especially an easy interoperability of different applied components can be achieved.

According to a seventh implementation form of the third aspect, the monitoring method uses a fourth interface for communication between the at least one monitoring instance and the at least one probe. The fourth interface is adapted to communicate from the at least one probe to the at least one monitoring instance a method for requesting a list of all virtual entities associated to a physical entity and/or a message for requesting a list of all probes associated to a physical entity or a virtual entity. Also the use of the fourth interface allows for a great flexibility of use of the monitoring system. Especially, an easy interoperability of the different components used is achieved.

According to a eighth implementation form of the third aspect, the monitoring method comprises when the at least one monitoring is to be reconfigured, reconfiguring a probe allocated to said monitored device by the monitoring server, while the probe is active or in operation. Thereby, a seamless handover but out the activating probe can be reached.

According to a ninth implementation form of the third aspect of the present invention, the monitoring method comprises, when the at least one monitored device is to be reconfigured deactivating the probe, reconfiguring the probe, and reactivating the probe by the monitoring server corresponding to a probe allocated to said monitored device. Although a seamless handover is thereby not possible, an increased reliability can be achieved. According to a tenth implementation form of the third aspect, the monitoring method comprises orchestrating by the sub-monitoring orchestrator parameters to be monitored by at least sub-sub-monitoring orchestrator of the monitoring system. In this case, an orchestration of monitoring of the parameters to be monitored by the at least one monitoring server is performed by the sub-sub-monitoring orchestrator.

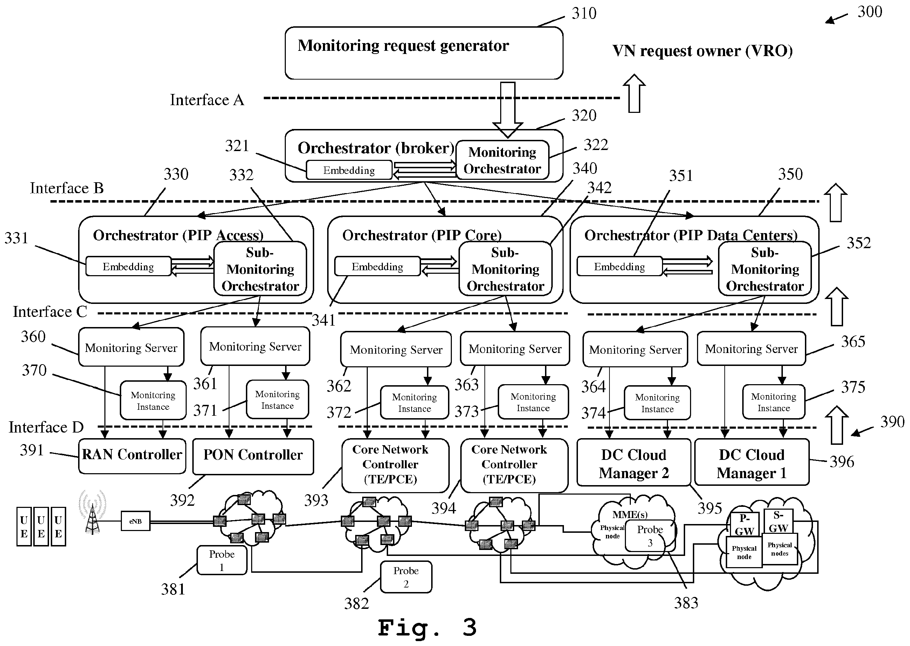

In general, two ideas form the basis for the present application:
1. Implement coordination of inter-domain monitoring: The performance and adherence to SLA of the virtual network must be monitored. This involves coordinated monitoring of physical, virtual as well as protocol and service layer parameters across clouds as well as PIPs. Moreover, coordination of the monitoring instances can be used to optimize the flow of data records reported by the probes, by means of probes combination and reconfiguration. The method to coordinate inter-domain monitoring is described along Fig. 3 - 5. Example: For monitoring the data flow across a network for a connection-less(UDP) flow it is enough to monitor the sending and receiving sides as long as the connection works as expected. The network only needs to be monitored if the connection is under performing to investigate the reasons. This results in saving the probe effect in the network domain, but requires the co-ordination of the network probes, the sending side probes and the receiving side monitor probes, that may be located in different domains.
2. Migrate probes following virtual resources:
   Monitoring a network cloud provides the capability to move virtualized resources. The move can be
   i) within a cloud
   ii) across clouds owned by the same PIP (Physical infrastructure providers) and iii) across PIPs.

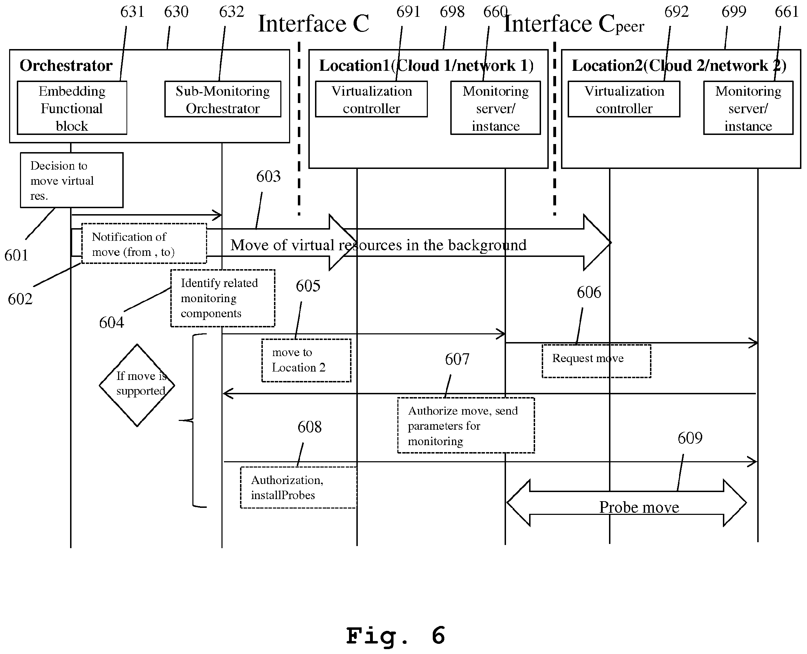

However, it is currently not possible to move probes to follow those resources and there is no prior art that enables this. The method to migrate probes is described along Fig. 6 - 8.

### Main difference between the ideas:

Note that the first idea assumes the existence of domain specific monitoring systems, it only provides the interfaces and the system to coordinate them. The domain separation may by horizontal: across separate network domains or vertical across different protocol stacks. In contrast, the second idea can apply to the monitoring systems within each domain as well as the system defined by the first idea.

Generally, it has to be noted that all arrangements, devices, elements, units and means and so forth described in the present application could be implemented by software or hardware elements or any kind of combination thereof. All steps which are performed by the various entities described in the present application as well as the functionality described to be performed by the various entities are intended to mean that the respective entity is adapted to or configured to perform the respective steps and functionalities. Even if in the following description of specific embodiments, a specific functionality or step to be performed by a general entity is not reflected in the description of a specific detailed element of that entity which performs that specific step or functionality, it should be clear for a skilled person that these methods and functionalities can be implemented in respective hardware or software elements, or any kind of combination thereof. Further, the method of the present invention and its various steps are embodied in the functionalities of the various described apparatus elements.

### BRIEF DESCRIPTION OF THE DRAWINGS

The present invention is in the following explained in detail in relation to embodiments of the invention and referenced to the enclosed drawings, in which
- Fig. 1: shows a first embodiment of the first aspect of the present invention,
- Fig. 2: shows an exemplary software defined network,
- Fig. 3: shows a second embodiment of the first aspect of the present invention,
- Fig. 4: shows an exemplary communication sequence of a third embodiment of the first aspect of the present invention,
- Fig. 5: shows an exemplary communication sequence in a fourth embodiment of the first aspect of the present invention,
- Fig. 6: shows a communication sequence of a fifth embodiment of the first aspect of the present invention,
- Fig. 7: shows a communication sequence of a sixth embodiment of the first aspect of the present invention,
- Fig. 8: shows a communication sequence of a seventh embodiment of the first aspect of the present invention,
- Fig. 9: shows a communication sequence of an eighth embodiment of the first aspect of the present invention,
- Fig. 10: shows a detail of a ninth embodiment of the first aspect of the present invention,
- Fig. 11: shows a detail of a tenth embodiment of the first aspect of the present invention,
- Fig. 12: shows a detail of an eleventh embodiment of the first aspect of the present invention,
- Fig. 13: shows a detail of a twelfth embodiment of the first aspect of the present invention, and
- Fig. 14: shows a flow diagram of an embodiment of the third aspect of the present invention.

### DESCRIPTION OF EMBODIMENTS

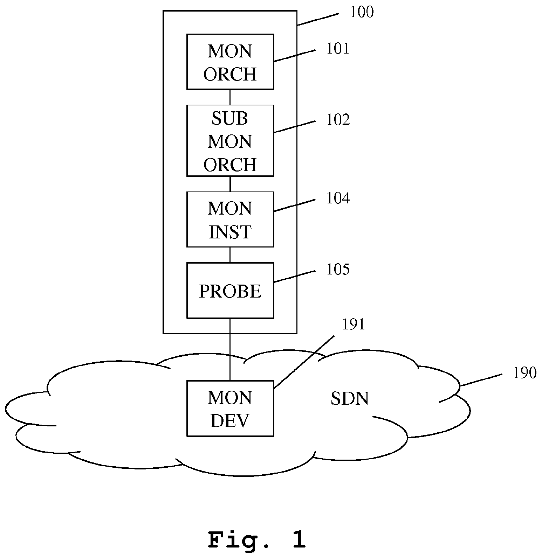

In Fig. 1, a first embodiment of the inventive monitoring system 100 according to the first aspect of the present invention is shown. The monitoring system 100 comprises a monitoring orchestrator 101 which is connected to a sub-monitoring-orchestrator 102. The connections depicted in the entire description are to be understood as the connected entities being able to communicate. The actual connection can be wired or wireless. The sub-monitoring-orchestrator 102 is connected to a monitoring instance 104. The monitoring instance 104 is connected to a probe 105. The monitoring system 100, especially the probe 105 is connected to a monitored device 191, which is part of a software defined network 190. The monitoring instance 104 is a hardware or software monitoring component being adapted to operate at the at least one probe 105 for monitoring the at least one monitored device 191. The monitoring orchestrator 101 is adapted to determine at least one first parameter to be monitored according to a monitoring request and to orchestrate the at least one first parameter.

The sub-monitoring orchestrator 102 is adapted to determine at least one second parameter to be monitored according to the at least one first parameter and orchestrate monitoring the at least one second parameter. This is an optional feature though.

In this embodiment, the monitoring system 100 and the software defined network 190 are depicted as completely separate entities. In practice, individual components of the monitoring system 100 can be embedded within the software defined network 190.

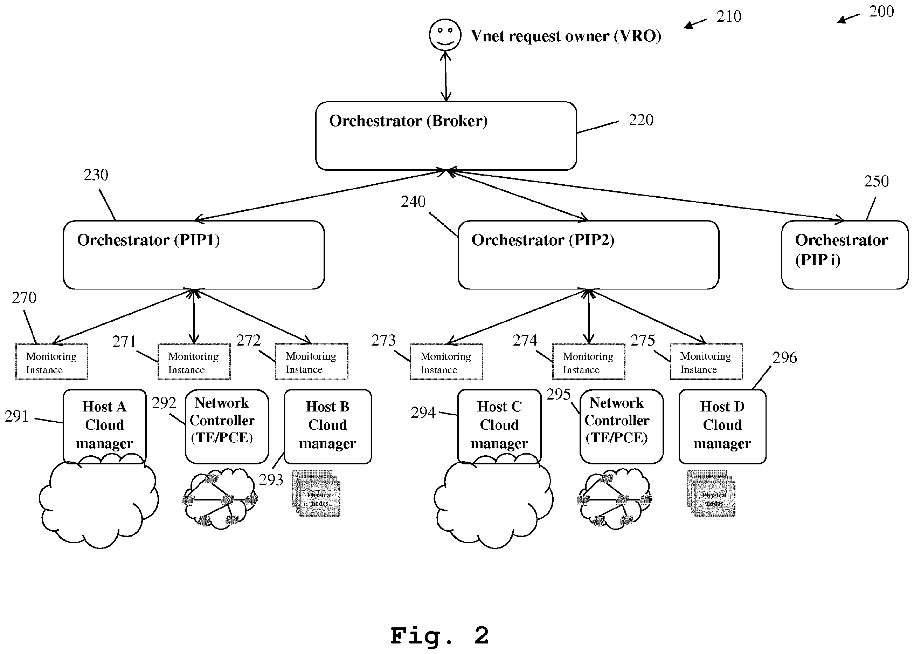

In Fig. 2, an exemplary software defined network 200 is shown. A virtual network request owner 210 is in communication with an orchestrator 220. The orchestrator 220 is for example located at a broker level. The orchestrator 220 is connected to further orchestrators 230, 240 and 250. These orchestrators 230, 240 and 250 are for example located at a physical infrastructure provider level. The orchestrator 230 is connected to monitoring instances 270, 271 and 272. The orchestrator 240 is connected to monitoring instances 273 - 275. In conventional software defined networks, a monitoring can only be performed at individual monitored devices, which are depicted here using reference numbers 291 - 296. Each monitoring instance 270 - 275 is then used for monitoring multiple monitored devices 291 - 296 in the same domain. A coordination of the monitoring is not possible. Each different hierarchical level of the here-depicted software defined network 200 has to be set up manually for providing monitoring services to the virtual network request owner 210.

In Fig. 3, a second embodiment of the first aspect of the present invention is shown. A monitoring system 300 comprises a monitoring request generator 310, which is connected by a first interface A to a monitoring orchestrator 322 within an orchestrator 320, which is for example located on a broker level. The orchestrator 320 furthermore comprises an embedding function block 321. Moreover, the orchestrator 320 is connected to further orchestrators 330, 340 and 350 through a second interface B. The orchestrators 330, 340 and 350 are located for example on a physical infrastructure provider level. Each orchestrator 330, 340 and 350 comprises an embedding function block 331, 341 and 351 and sub-monitoring orchestrators 332, 342, 352. The sub-monitoring orchestrators 332, 342, 352 are connected through a third interface C to monitoring servers 360 - 365. The sub-monitoring orchestrator 332 is connected to the monitoring servers 360 and 361. The sub-monitoring orchestrator 342 is connected to monitoring servers 362 and 363. The sub-monitoring orchestrator 352 is connected to monitoring servers 364 and 365. The monitoring servers 360 - 365 are each connected to a monitoring instance 370 - 375. Moreover, the monitoring servers 360 - 365 are each connected to a monitored device 391 - 396. The monitoring instances370 - 375 are also each connected to the monitored device 391 - 396, which is connected to the monitoring server 360 - 365, the individual monitoring instance 370 - 375 is connected to. The monitored devices 391 - 396 either comprise probes for performing the monitoring or are connected to external probes 381, 382, 383. The monitoring instances 370 - 375 are in this case also connected to the external probes 381, 382, 383. For reasons of practicality, these connections were not depicted here.

The monitoring request generator 310 is set up for sending a monitoring request to the monitoring orchestrator 322. Additionally, the monitoring request generator 310 can be adapted to also generate the monitoring request either automatically or based on a user interaction. Based on this monitoring request, the monitoring orchestrator 322 determines at least one first parameter to be monitored. Based on this at least one first parameter to be monitored, the sub-monitoring orchestrator 332, 342, 352 of the respective orchestrator 330, 340, 350 determines at least one second parameter to be monitored. Based upon this at least one second parameter, the monitoring servers 360, 361, 362, 363, 364, 365 generate at least one third parameter to be monitored. The monitoring of this at least one third parameter is performed by the monitoring instances 370, 371, 372, 373, 374, 375 by use of the probes inherent to the monitored devices 391, 392, 393, 394, 395, 396 and/or the external probes 381, 382, 383.

In the following the individual component types are described in greater detail:
A probe may be:
- A monitoring capability provided by the virtualization controller.
- Reporting capabilities provided by Open Flow - enabled switches starting from Open-Flow release 1.1.0
- The conclusions of the RESERVOIR European project for what concern monitoring Data Centers. It identifies 3 levels of monitoring at physical, virtual and service applications level
- A software instance embedded in a Network Element; in this case the configuration of the instance is normally controlled by a proprietary OSS interface provided by the constructor of the Network Element;
- A dedicated equipment (physical probe) intercepting messages exchanged between two Network Elements.

### Orchestrator embedding blocks:

At broker level, the Orchestrator embedding block is responsible for splitting the virtual network service requests received from a Service Provider into pieces and distributing them to the PIPs. Normally, the orchestrator tries to find the splitting with the minimum cost. The service requirements according to service level agreements (SLA) are taken as constraints that have to be satisfied. At PIP level, the Orchestrator embedding block is responsible for finding an optimal mapping of brokers' requests to the underlying physical infrastructure. A typical example of optimization performed by the PIP orchestrator is maximizing the number of service requests arriving from various brokers to be embedded into the physical infrastructure of the PIP.

### Monitoring Orchestrator: broker

It is a Functional Block (FB) of the broker's Orchestrator, in charge of:
1. receiving VNet service descriptions from the Embedding FB of the broker's Orchestrator;
2. selecting the appropriate monitoring configuration;
3. proposing the monitoring configuration to the Embedding FB.

Concerning point 1, the VNet service description shall include the SLA parameters to be monitored and, when explicitly requested by the VNet configuration, the location of the monitoring points. The Monitoring Orchestrator in the broker may or may not have a complete knowledge of the monitoring capabilities of the underlying virtual infrastructure: location of the probes (geographical location and monitored object or interface) and monitored parameters.

Regarding the point 2, the present application does not define specific algorithms for the selection of the monitoring configuration, which will be based on SLA composition methods. The output of point 2 is the monitoring configuration; the Monitoring Orchestrator may also reject the VNet request and propose to the Embedding FB a feasible monitoring infrastructure, as a subset of the request.

If accepted by the broker's Embedding FB, the monitoring configuration will be dispatched to the Embedding FB in the PIP's Orchestrators involved in the VNet embedding.

### Sub-Monitoring Orchestrator: PIP

It is a Functional Block of the PIP's Orchestrator, in charge of
1. receiving VNet descriptions from the Embedding FB of the PIP's Orchestrator;
2. selecting the appropriate monitoring configuration and propose it to the Embedding FB of the PIP's Orchestrator;
3. if accepted by the PIP's Embedding FB, dispatch the monitoring configuration to the Monitoring Servers located in each Controller in the underlying infrastructure.

### Monitoring Servers

Monitoring Servers can be located in a Controller of the monitored device or can be part of the monitoring system as separate component. The monitoring server is usually a software daemon that listens to new incoming requests for the instantiating and/or moving of probes. It may include a limited intelligence of deciding how to place the probes. The role of the Monitoring Server is to exploit the monitoring capabilities provided by the Controllers, translating them in a standard language on the third interface C between the Monitoring Server and the PIP's Monitoring Orchestrator. The server generally creates a monitoring instance, thread/process to handle this interaction for each virtual network. We define probes as any capability provided by virtualization controllers (such as OpenFlow Controllers or Data Center Controllers) or physical probes (embedded in Network Elements or intercepting the signaling between Network Elements). Resource controllers in this case function as request delegators and are responsible for installing, moving, stopping and starting probes on the request of the monitoring instance.

For each virtual network, the Monitoring instance created by the server interacts via the fourth interface D with the related controllers/probes using the appropriate communication protocol (e.g. the language to interact with the OpenFlow Controller to trigger parameters monitoring and reporting).

### Monitoring Instances

For each monitoring request received by the PIP's Sub-Monitoring Orchestrator, the Monitoring Server will instantiate one or more Monitoring Instances to control the Probes involved. Each Monitoring Instance manages the probe for what concerns the specific monitoring configuration request and related reporting. A Monitoring Instance:
1. Supports the fourth interface D for monitoring physical or virtual entities;
2. Supports threshold configurations of monitored entities to activate appropriate alarms;
3. Periodically or as a consequence of an alarm, reports statistics to a specified location.

### Probe operation

In the following sections, we will refer to operations performed by the monitoring instances to administer the probes. For the sake of clarity, here follow the definition of these operations:
- Instantiating (de-instantiating) a probe: instantiating a probe involves all the operations required to start-up the software components that implement the monitoring capabilities of the probe. Different operations might be required:
   o If the probe runs on dedicated hardware: instantiating the probe implies booting up the dedicated hardware and then starting up the software components that implement the monitoring capabilities of the probe;
   o If the probe is a software component that may run on a generic virtual machine: instantiating the probe implies booting up the virtual machine, implementing the software image of the probe on the virtual machine and then starting up the software components that implement the monitoring capabilities of the probe;
- Moving a probe: it means de-instantiating a probe from a source location and instantiating it in a target location, in a coordinated manner;
- Configuring a probe: it consists in dispatching to the software components of the probe the instructions about:
   ∘ The parameter to be monitored;
   ∘ The destination of the monitoring reports;
   ∘ Any other detail related to the timing of the reported parameters.

Finally, the concept of "operating a probe" is wide and it may involve any of the above mentioned operations.

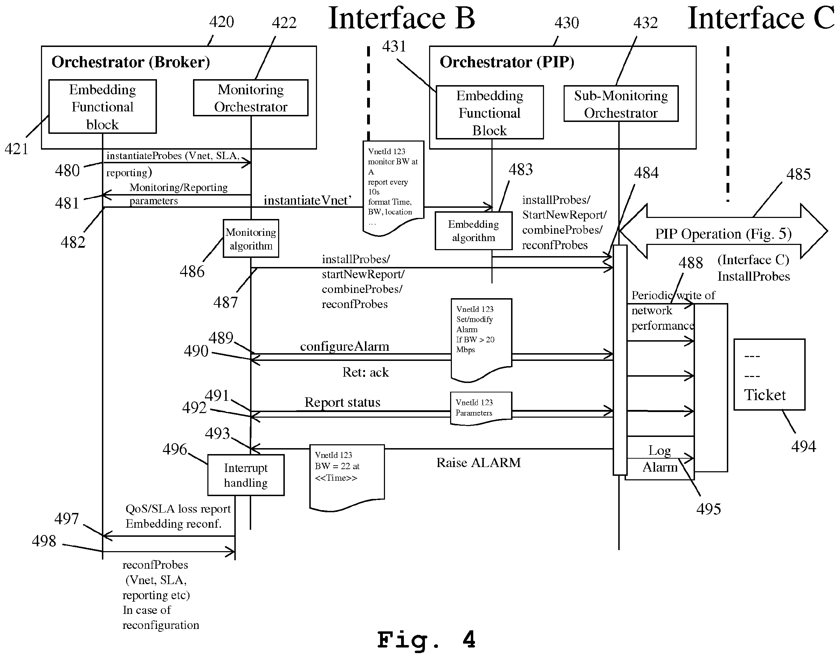

In Fig. 4, a detail of a third embodiment of the first aspect of the present invention is depicted. Especially, a sequence of messages between the different function blocks through the second interface B is shown. The monitoring system comprises an orchestrator 420, which is for example on the broker level and an orchestrator 430, which is for example on the physical infrastructure provider level. The orchestrator 420 comprises an embedding functional block 421 and a monitoring orchestrator 422. The orchestrator 430 comprises an embedding functional block 431 and a sub-monitoring orchestrator 432.

Fig. 4 describes the operations at Broker level.
Step 480: as a consequence of a virtual network request received from a VRO, the Broker's Embedding FB 421 requests the Broker's Monitoring Orchestrator 422 to instantiate probes; the probes must fulfill requirements issued by the Embedding FB 421, in order to monitor the SLA agreed for the Virtual Network (VNet); in addition, the probes might also be requested to report specific parameters to remote locations (e.g to the VRO);
Step 481: the Monitoring Orchestrator 422 acknowledges the InstantiateProbes message; at this point, the Monitoring Orchestrator 422 has two options:
   - option a: to provide the list of parameters to be monitored; after that, it will not take any further actions;
   - option b: to handle directly the coordination of the PIPs Sub-Monitoring Orchestrators;
Step 482: the Broker's Embedding FB 421 requests a PIP's Embedding FB 431 to allocate resources for the requested VNet; in case of:
   option a: the VNet request doesn't include monitoring requirements, which are handled separately between the Monitoring Orchestrators 422, 432 (step 486);
   option b: the VNet request includes the configuration provided by the Broker's Monitoring Orchestrator in Step 481;
Step 486: the Broker's Monitoring Orchestrator 422 runs a Monitoring algorithm to determine the embedding of the requested probes;
Step 483: the PIP's Embedding FB 431 runs an Embedding algorithm to determine the embedding of the requested VNet, including the monitoring configuration received in Step 481 option b;
Step 487: as a follow up of Step 486, the Broker's Monitoring Orchestrator 422 sends instructions to a PIP's Sub-Monitoring Orchestrator 432 to implement the monitoring requirements; this can result in: instantiating new probes, start new reports in existing probes, combine existing probes, reconfigure existing probes;
Step 484: as a follow up to Step 483, the PIP's Embedding FB 431 sends instructions to the correspondent PIP's Sub-Monitoring Orchestrator 432 to implement the monitoring requirements; this can result in: instantiating new probes, starting new reports in existing probes, combining existing probes, reconfiguring existing probes.

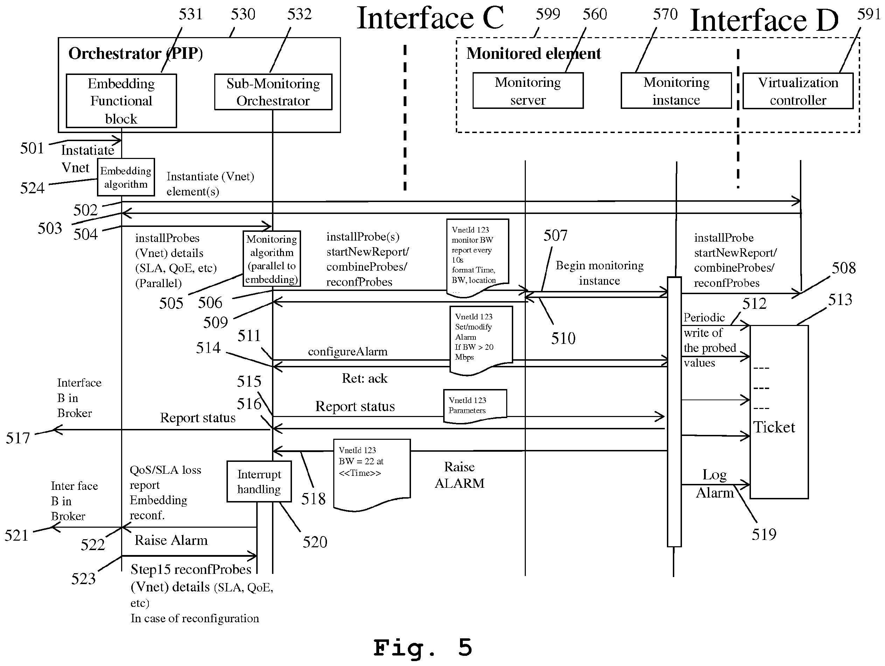

Further operations performed by the PIP's Sub-Monitoring Orchestrator 432 are described in Fig. 5 and in the regarding section. From Step 489 to Step 497 we have standard operations commonly supported by traditional monitoring systems:
Steps 489, 490: the Broker's Monitoring Orchestrator 422 requests the PIP's Sub-Monitoring Orchestrator 432 to configure alarms;
Steps 491, 492: the Broker's Monitoring Orchestrator 422 requests the PIP's Sub-Monitoring Orchestrator 432 to report status;
Step 493: the PIP's Sub-Monitoring Orchestrator 432 raises an alarm to the Broker's monitoring Orchestrator 422;
Step 496: the Broker's monitoring Orchestrator 422 handles the alarm;
Step 497: the Broker's Monitoring Orchestrator 422 reports a QoS/SLA loss to the Broker's Embedding FB 421;
Step 498: the Broker's Embedding FB 421 reacts by reconfiguring the monitoring requirements; this step is a consequence of the QoS/SLA loss reported in Step 497. The Broker's Orchestrator 420 triggers actions to, for instance, identify the root cause of the performance degradation by instantiating additional probes or reconfiguring the existing probes. The process restarts from Step 481.

Moreover, in Fig. 5, a second detail of a fourth embodiment of the first aspect of the present invention is shown. Especially, messages between the orchestrator on physical infrastructure provider level and monitoring servers and instances are shown.

The monitoring system comprises an orchestrator 530, which is for example an orchestrator of the physical infrastructure provider level. The orchestrator 530 comprises an embedding functional block 531 and is sub-monitoring orchestrator 532. Moreover the monitoring system comprises a monitoring server 560 and a monitoring instance 570. The monitoring server 560 and the monitoring instance 570 are in this embodiment not only part of the monitoring system, but also part of the monitored software defined network SDN. Therefore, the monitoring server 560 and the monitoring instance 570 are part of a monitored element 599. Moreover, the monitored element 599 comprises a virtualization controller 591, which corresponds to the actual monitored device.

Fig. 5 describes the operations at PIP level. Steps 501, 524 and 504 are the same as the steps 482, 483, 484 of Fig. 4.
Step 502: the PIP's Embedding FB 531 instantiates VNet elements to the relevant Virtualization Controllers;
Step 505 (only in case of Step 504): in parallel to Step 524, the PIP's Sub-Monitoring Orchestrator 532 executes a Monitoring algorithm to calculate the embedding of the probes;
Step 506: as a consequence of Step 487 in Fig. 4 or of Step 505 in the current Figure, the PIP's Sub-Monitoring Orchestrator 532 implements the monitoring requirements in the relevant Monitoring Servers 560; this can result in: instantiating new probes, starting new reports in existing probes, combining existing probes, reconfiguring existing probes.
Step 507: each Monitoring Server 560 begins or reconfigures the requested monitoring instances 570;
Step 508: each Monitoring Instance 570 interacts with the correspondent Virtualization Controller to execute the instructions received by the Monitoring Server 560.

From Step 512 to Step 522 we have standard operations commonly supported by traditional monitoring systems:
Steps 511, 514: the PIP's Sub-Monitoring Orchestrator 532 requests Monitoring Instances 560 to configure alarms;
Step 515: the PIP's Sub-Monitoring Orchestrator 532 requests Monitoring Instances 570 to report status;
Step 518: Monitoring Instances 570 raise alarms to the PIP's Sub-Monitoring Orchestrator 532;
Step 520: the PIP's Sub-Monitoring Orchestrator 532 handles the alarm;
Step 522: the PIP's Sub-Monitoring Orchestrator 532 reports a QoS/SLA loss to the Broker's Embedding FB;
Step 523: the PIP's Embedding FB 531 reacts by reconfiguring the monitoring requirements; this step is a consequence of the QoS/SLA loss reported in Step 522: the PIP's Orchestrator 532 triggers actions, for instance, to identify the root cause of the performance degradation by instantiating additional probes or reconfiguring the existing probes. The process restarts from Step 504.

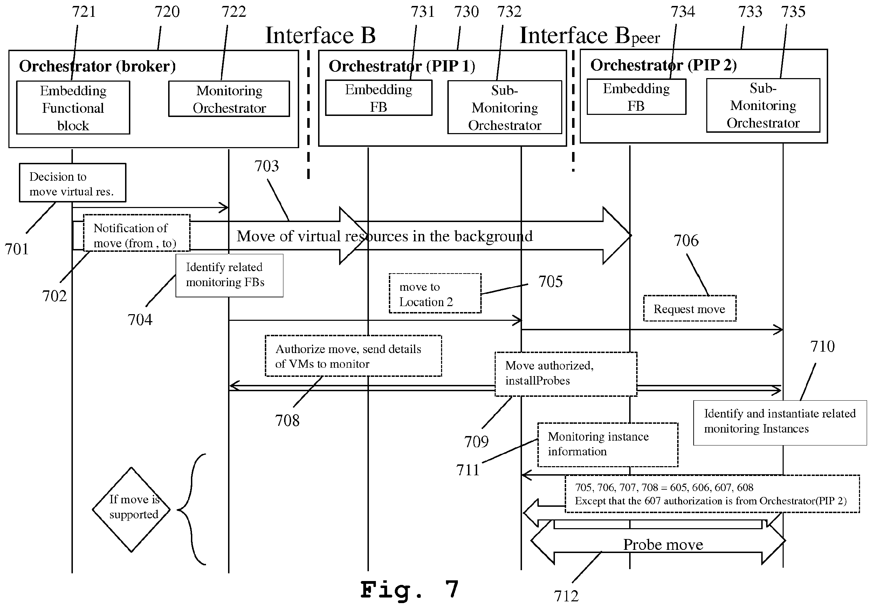

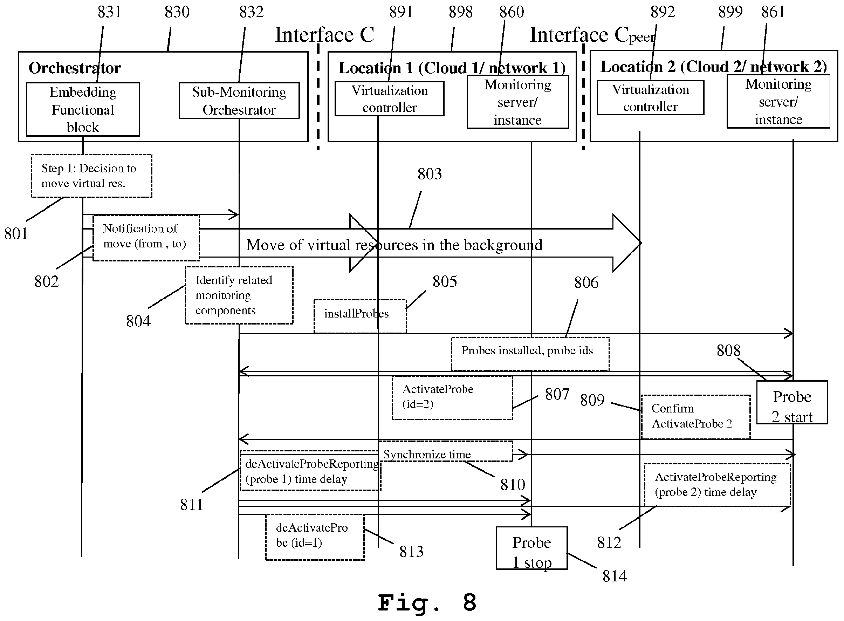

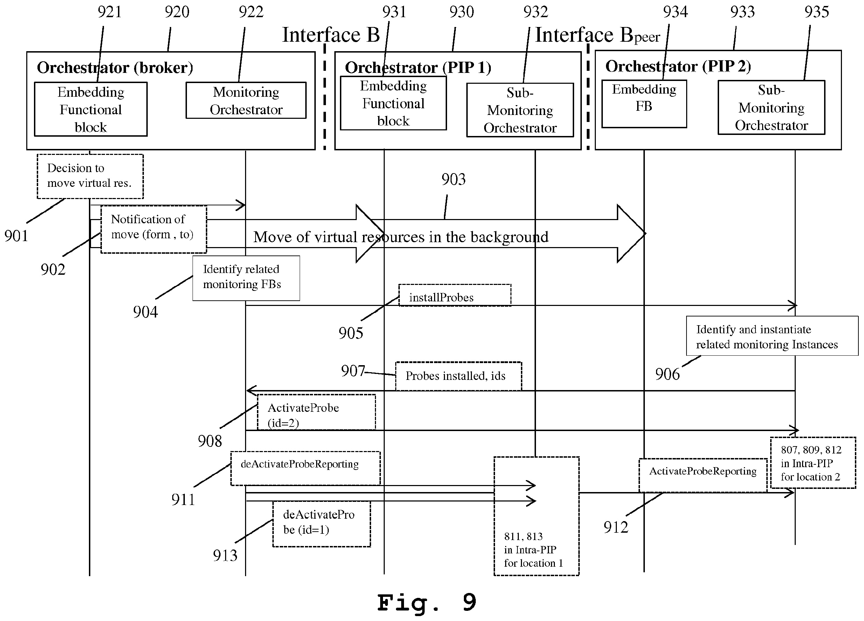

Since virtual functions are moveable from one cloud to another, or even from one physical infrastructure provider to another, the monitoring instances should be moveable as well. This move must be coordinated by the orchestrators. There are in principle two ways to implement migration:
- one in a system of probes which may support direct move amongst controllers, the message flows for this are described in Fig. 6 for migration within the same physical infrastructure provider and in Fig. 7 for migration between different physical infrastructures providers.
- one by stopping the probes at one location and starting at another, the message flows for this case are described in Fig. 8 for the intra-physical infrastructure provider case and in Fig. 9 for the inter-physical infrastructure provider case.

In Fig. 6, a message sequence of a fifth embodiment of the first aspect of the present invention is shown. The monitoring system here comprises an orchestrator 630, which comprises an embedding functional block 631 and a sub-monitoring orchestrator 632. Also the monitoring system comprises a first monitored element 698, which comprises a virtualization controller 691 and a monitoring server/instance 660 and a second monitored element 699, which comprises a virtualization controller 692 and a monitoring server/instance 661.

Fig. 6 describes the movement of probes within the same PIP.
Step 601: the PIP's Embedding FB 631 triggers the migration of virtual resources;
Step 602: the movement is notified to the Sub-Monitoring Orchestrator 632;
Step 604: the PIP's Sub-Monitoring Orchestrator 632 runs the Monitoring algorithm to identify the new placement of the probes; if the move of probes is supported, then the next steps follow;
Step 605: the PIP's Sub-Monitoring Orchestrator 632 asks the Monitoring Server 660 owning the Monitoring Instance to move it to new location;
Step 606: the source Monitoring Server 660 notifies the request of movement to the destination Monitoring Server 661;
Step 607: the destination Monitoring Server 661 requests the PIP's Sub-Monitoring Orchestrator 632 to authorize the probe's migration;
Step 608: the PIP's Sub-Monitoring Orchestrator 632 grants the authorization.

Finally the movement of the probe is managed between the Monitoring Servers 660, 661.

In Fig. 7, also an exemplary message sequence of a sixth embodiment of the first aspect of the present invention is shown. The monitoring system here comprises an orchestrator 720, which comprises an embedding functional block 721 and a monitoring orchestrator 722. The monitoring system furthermore comprises an orchestrator 730 on physical infrastructure provider level which comprises an embedding function block 731 and a sub-monitoring orchestrator 732. Furthermore the monitoring system comprises a second orchestrator on physical infrastructure provider level 733, which again comprises an embedding function block 734 and a sub-monitoring orchestrator 735.

Fig. 7 describes the movement of probes between different PIPs.
Step 701: the Broker's Embedding FB 721 triggers the migration of virtual resources;
Step 702: the movement is notified to the Broker's Monitoring Orchestrator 722;
Step 704: the Broker's Monitoring Orchestrator 722 identifies the PIPs that will be involved in the migration;
Step 705: the Broker's Monitoring Orchestrator 722 asks the PIP's Sub-Monitoring Orchestrators 732 to move the Monitoring Instance and probe to the new location;
Step 706: the source PIP's Sub-Monitoring Orchestrator 732 notifies the request of movement to destination PIP's Sub-Monitoring Orchestrator 735;
Step 708: the destination PIP's Sub-Monitoring Orchestrator 735 requests the Broker's Monitoring Orchestrator 722 to authorize the probe's migration;
Step 709: the Broker's Monitoring Orchestrator 722 grants the authorization;
Step 710: the destination PIP's Sub-Monitoring Orchestrator 735 runs the Monitoring algorithm to calculate the placement of the probe;
Step 711: the destination PIP's Sub-Monitoring Orchestrator 735 provides the source PIP's Sub-Monitoring Orchestrator 732 with location and access information of the new probe to be activated.
Steps 705, 706, 707, 708 are the same as the steps 605, 606, 607, 608 of Fig. 6, except that the authorization in Step 607 is from PIP2.

In Fig. 8, a third exemplary sequence of messages of a seventh embodiment of the first aspect of the present invention is shown. The monitoring system comprises an orchestrator 830, which is for example on the physical infrastructure provider level and comprises an embedding functional block 831 and a sub-monitoring orchestrator 832. The monitoring system furthermore comprises a first monitored element 898, which again comprises a virtualization controller 891 and a monitoring server/instance 860. Also, the monitoring system comprises a second monitored element 899, which comprises a virtualization controller 892 and a monitoring server/instance 861.

Fig. 8 describes the migration of probes between different PIPs when direct movement is not allowed.
Step 801: the PIP's Embedding FB 831 triggers the migration of virtual resources;
Step 802: the movement is notified to the Sub-Monitoring Orchestrator 832;
Step 804: the PIP's Sub-Monitoring Orchestrator 832 runs a Monitoring algorithm to identify the new placement of the probes; if moving the probes is not supported then the next steps follow;
Steps 805, 806: the PIP's Sub-Monitoring Orchestrator 832 asks destination Monitoring Server 861 to instantiate Probe2; the Monitoring Server 860 acknowledges the instantiation;
Steps 807, 809: the PIP's Sub-Monitoring Orchestrator 832 asks destination Monitoring Server 861 to activate Probe2; the Monitoring Server 861 acknowledges the activation;
Step 810: the source and destination Monitoring Servers 860, 861 synchronize their time to be ready to swap the probes;
Steps 811, 812: the PIP's Sub-Monitoring Orchestrator 832 asks the source Monitoring Server 860 to deactivate reporting in Probe1 and the destination Monitoring Server 861 to activate reporting in Probe2 at a synchronized time in the near future to account for message propagation delay.
Step 813: the PIP's Sub-Monitoring Orchestrator 832 asks the source Monitoring Server 860 to remove Probe1.

In Fig. 9, a fourth sequence of messages of an eighth embodiment of the first aspect of the present invention is shown. The monitoring system here comprises an orchestrator 920, which is for example on the broker level and comprises an embedding function block 921 and a monitoring orchestrator 922. Also the monitoring system comprises an orchestrator 930, which is on physical infrastructure provider level and comprises an embedding function block 931 and a sub-monitoring orchestrator 932. Also it comprises a second orchestrator on physical infrastructure provider level 933, which again comprises an embedding function block 934 and a sub-monitoring orchestrator 935.

Fig. 9 describes the migration of probes between different PIPs when movement is not allowed.
Step 901: Broker's Embedding FB 821 triggers the migration of virtual resources;
Step 902: the movement is notified to the Broker's Monitoring Orchestrator 922;
Step 904: Broker's Monitoring Orchestrator 922 identifies the PIPs that will be involved in the move;
Step 905: Broker's Monitoring Orchestrator 922 asks the destination PIP's Sub-Monitoring Orchestrator 932 to instantiate Monitoring Instance and Probe at the destination;
Step 906: the destination PIP's Sub-Monitoring Orchestrator 932 runs the monitoring algorithm to calculate the placement of the Monitoring Instance and probe;
Step 907: the destination PIP's Sub-Monitoring Orchestrator 935 informs the Broker's Monitoring Orchestrator 922 when the probe is instantiated at the destination;
Step 908: Broker's Monitoring Orchestrator 922 asks the destination PIP's Sub-Monitoring Orchestrator 935 to activate the destination probe;
Steps 911, 912: Broker's Monitoring Orchestrator 922 asks the destination PIP's Sub-Monitoring Orchestrator 935 to activate reporting and the source PIP's Sub-Monitoring Orchestrator 922 to deactivate reporting;
Step 913: The broker's Monitoring Orchestrator 911 asks the source PIP's Sub-Monitoring Orchestrator 932 to remove the old Monitoring Instance and probe.

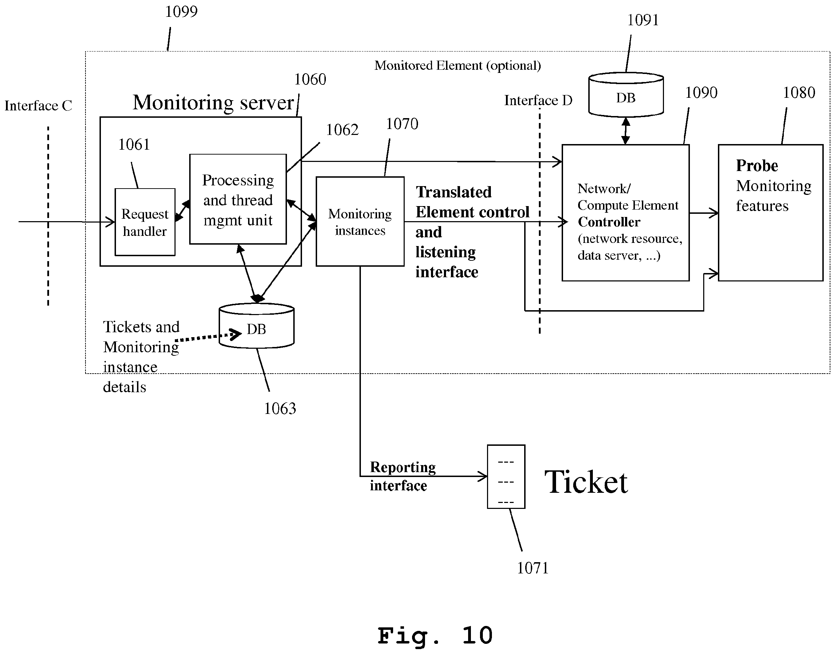

In the following, the first interface A, the second interface B, the third interface C and the fourth interface D, which are present in the previous figures 3 - 9 and the following figures 10 - 13 are explained.

### Interface A

The interface A exists between a virtual network request owner (VRO) which can be represented by a monitoring request generator and a broker orchestrator. One of the cases in which a brokering entity may require to move a monitoring probe is due to the request of moving the virtual resources to a new location. We also need to enable the possibility that the operator may directly want to interact and move his own monitoring functions, in particular, if the system allows him to enable and/or instantiate his own monitoring probes.
1. instantiateProbe *Arguments: probeName, (physical*/*virtual) location, installInstructions* The instantiateProbe function is a directive to the broker orchestrator to instantiate a probe in a particular location, specified by location. The call enables the VRO to instantiate proprietary probes by providing an option for install instructions which may include the install image (or the image location) of the probe.
2. moveProbe *Arguments: probe*/*virtual resource*/*vnet-id, end (physical*/*virtual) location, moveInstructions* The moveProbe function call instructs the broker orchestrator to move a probe of *probe-id* or all probes associated with a virtual resource or vnet *vr-id*/*vnet-id,* to a new virtual or physical end location. Exact instructions or commands on how to execute a move may also be provided by the VRO in case the probe is, for example, proprietary in nature.

### Interface B and Bpeer

The interface B exists between a broker orchestrator entity and a physical infrastructure providers orchestrator, see Fig. 3. The brokering entity may or may not own their own physical infrastructure. To solve the problem of moving a monitoring probe we can see from the Fig. 6, 8 that the orchestrating entity of the physical infrastructure owners supports the following interface.
1. instantiateProbe *Arguments: probeName, (physical*/*virtual) location, installInstructions* The instantiateProbe function is a directive to the pip orchestrator to instantiate a probe in a particular location, specified by location.
2. startNewReport *Arguments: probe-id, reportingParameter(s)* The startNewReport function is a directive to the pip orchestrator to reconfigure the parameters reported by a probe.
3. combineProbes *Arguments: probel-id, probe2-id,..., probeN-id, installInstructions* The combineProbes function is a directive to the pip orchestrator to combine N probes into one single probe.
4. reconfigureProbes *Arguments: probe-id, installInstructions* The reconfigureProbes function is a directive to the pip orchestrator to re- configure a probe.
5. configureAlarm *Arguments: vnetID*/ *probe(s), condition, interruptHandler, alarmArguments* The configure alarm function call instructs the pip orchestrator to create an alarm over the given vnet/probe to raise the *interruptHandler* when the condition is met. Other alarm arguments could be provided specific to the alarm being configured.
6. reportStatus *Arguments: vnetID*/ *probe(s), statusArguments* The reportStatus function call requests a possibly unlogged statistic of a vnet/probe and provides some additional arguments to precisely define what it is inquiring the status of. It can also be used to initiate the logging of a new previous unlogged statistic to a location determined by statusArguments.
7. raiseAlarm *Arguments: condition violated, vnetID*/*probes, interruptHandler* The broker orchestrator is called by the pip orchestrator if an alarm situation occurs either when a condition set by *configureAlarm* is met or some other prespecified SLA contraint is violated in the vnet. This alarm may only be raised if the PIP orchestrator itself cannot resolve the issue. This call can also be used to notify the broker of a alarm violation without asking it to perform any action (interruptHandler = null).
8. move *Arguments: probe-ID*/*vnet ID, destination location, move arguments* The move function instructs the Orchestrator of a PIP to move the probe associated with the probe-id or the vnet ID (or virtual resource ID) to a destination location. If the PIP Orchestrator does not support the move of such a probe, the additional move arguments including instructions and probe install images may be provided.
9. authorizeMove *Arguments: probe-id, moveRequest, requestingPipOrchestrator* This call verifies that the move requested by a peer monitoring instance is actually approved by/known to the orchestrator.
10. requestMove *Arguments: probeParameters*/ *probeID* This function is called by a peer PIP orchestrator requesting a move of the probes from his domain to the domain controlled by the current PIP. The probe parameters and ID are passed as arguments. To request is saved till it is authorized by a parent orchestrator. If the authorization succeeds a reply id sent approving the move request via for example the moveRequestAccepted function.
11. moveRequestAccepted *Arguments: probeParameters*/ *probeID* this call specifies that the move requested earlier has now been authorized and accepted and can now be executed. This is a reply to requestMove call.
12. activateProbe *Arguments: probe-id, runInstructions* Runs the probe with a default or optional command.
13. de-activateProbe *Arguments: probe-id, stopInstructions* Kills the probe according to the optional instructions.
14. activateProbeReporting *Arguments: probe-id, reportingParameters(s)*
   Activates the probes reporting.
15. de-activateProbeReporting *Arguments: probe-id* Deactivates probes.

### Interface C and Cpeer

The interface C exists between physical infrastructure owners' broker and the physical infrastructure controller's monitoring server/instance. The monitoring instance is particular to the Vnet being used. The brokering entity may or may not own their own physical infrastructure. To solve the problem of moving a monitoring probe we can see from the Fig. 7, 9 that the orchestrating entity of the broker supports the following interface.
1. instantiateProbes *Arguments: location, vnet-ID, vnetParameters, installInstructions* The call asks a Monitoring Server to instantiate probes to specific locations (physical/virtual) with optional installation instructions. Returns the instantiated probe-id(s) or failure. The call may invoke an operation within the monitoring instance/server to identify instantiation locations. Can be a reply to a authorizeMove call.
2. startNewReport *Arguments: probe-id, reportingParameter(s)* The startNewReport function is a directive to a Monitoring Server to reconfigure the parameters reported by a probe.
3. combineProbes *Arguments: probel-id, probe2-id*,..., *probeN-id, location, vnet-ID, vnetParameters, installInstructions* The combineProbes function is a directive to the Monitoring Server to combine N probes into one single probe.
4. reconfigureProbes *Arguments: probe-id, location, vnet-ID, vnetParameters, installInstructions* The reconfigureProbes function is a directive to a Monitoring Server to reconfigure a probe.
5. configureAlarm *Arguments: vnetID*/ *probe(s), condition, interruptHandler, alarmArguments* The configure alarm function call instructs the controller/probe to create an alarm over the given vnet/probe to raise the *interruptHandler* when the *condition* is met. Other alarm arguments could be provided specific to the alarm being configured.
6. reportStatus *Arguments: vnetID*/ *probe(s), statusArguments* The reportStatus function call requests a possibly unlogged statistic of a vnet/probe and provides some additional arguments to precisely define what it is inquiring the status of. It can also be used to initiate the logging of a new previous unlogged statistic to a location determined by statusArguments.
7. raiseAlarm *Arguments: condition violated, vnetID*/*probes*, *interruptHandler* The pip orchestrator is called by the network controller if an alarm situation occurs either when a condition set by *configureAlarm* is met or some other pre-specified SLA constraint is violated in the vnet/probes. This call can also be used to notify the pip administrator of a alarm violation without asking it to perform any action (interruptHandler = null) in case the network controller can resolve it or the alarm situation has resolved itself.
8. isMoveSupported *Arguments: destination address* This function simply checks if the node controller supports probe migration. The node controller also needs to check if the destination node controller supports the move, if the optional argument of the destination address is provided.
9. move *Arguments: destination controller* The move function instructs a resource controller (Cloud manager or network controller) to move the probe associated with the probe-id or the vnet ID (or virtual resource ID) to a destination location. If the PIP Orchestrator doesn't support the move of such a probe, the additional move arguments including instructions and probe install images may be provided. To execute the move request, when the move is supported, the particular probe or the network controller may directly request the destination location to accept the probe instantiation. The destination location authorizes this request from the common orchestrator and approves the request. This is followed by the actual move of probe itself.
10. authorizeMove *Arguments: probe-id, moveRequest, requestingPipOrchestrator* This call verifies that the move requested by a peer monitoring instance is actually approved by/known to the orchestrator.
11. requestMove *Arguments: probeParameters*/ *probeID* This function is called by a peer monitoring instance requesting a move of the probes from his domain to the domain controlled by the current controller. The probe parameters and ID are passed as arguments. To request is saved till it is authorized by a parent orchestrator. If the authorization succeeds a reply id sent approving the move request via for example the moveRequestAccepted function.
12. moveRequestAccepted *Arguments: probeParameters*/ *probeID* this call specifies that the move requested earlier has now been authorized and accepted and can now be executed. This is a reply to requestMove call.
13. requestVirtualEntities *Arguments: physical-entity-id* The call asks the PIP broker to return a list of all the virtual entities associated to a physical entity.
14. requestAssociatedProbes *Arguments: virtual*/*physical-entity-id* The call asks the PIP-broker to list all the probes (via probe-ids) associated to a physical/virtual entity.
15. deinstantiateProbe *Arguments: probe-id, unistallInstructions* De-instatiate the probe. Returns success/fail.
16. activateProbe *Arguments: probe-id, runInstructions* Runs the probe with a default or optional command.
17. de-activateProbe *Arguments: probe-id, stopInstructions* Kills the probe according to the optional instructions.
18. activateProbeReporting *Arguments: probe-id, reportingParameters(s)*
   Activates the probes reporting.
19. de-activateProbeReporting *Arguments: probe-id* Deactivates probes.

### Interface D

The interface D exists between monitoring servers/instances and the network/cloud controller of the physical infrastructure, see Figure 10. The brokering entity may or may not own their own physical infrastructure. To solve the problem of moving a monitoring probe we can see from the Figures 7, 9 that the orchestrating entity of the broker must support the following interface.
1. instantiateProbe *Arguments: location, installinstructions* The calls ask the resource controller to instantiate probes to specific locations (physical/virtual) with optional installation instructions. Returns the instantiate probe-id or failure. Although most likely the intelligence to identify probe locations is in the orchestrators, the call may invoke an operation within the controller to identify install locations.
2. startNewReport *Arguments: probe-id, reportingParameter(s)* The start- NewReport function is a directive to a resource controller to reconfigure the parameters reported by a probe.
3. combineProbes *Arguments: probel-id, probe2-id*,..., *probeN-id, loca- tion, installInstructions* The combineProbes function is a directive to a resource controller to combine N probes into one single probe.
4. reconfigureProbes *Arguments: probe-id, location, installInstructions* The reconfigureProbes function is a directive to a resource controller to reconfigure a probe.
5. isMoveSupported *Arguments: probe-id* The answer is a simple yes or no depending on whether the move is supported for a particular probe.
6. move *Arguments: probe-id, location-to-move-to* The move call asks the particular physical/ virtual machine to move the probe of probe-id to location-to- move-to.
7. requestVirtualEntities *Arguments: physical-entity-id* The call asks the network controller to list all the virtual entities associated to a physical entity.
8. requestAssociatedProbes *Arguments: virtual*/*physical-entity-id* The call asks the network controller to list all the probes (via probe-ids) associated to a physical/virtual entity.
9. deinstantiateProbe *Arguments: probe-id, unistallInstructions* Uninstalls the probe. Returns succes/fail.
10. activateProbe *Arguments: probe-id, runInstructions* Runs the probe with a default or optional command.
11. de-activateProbe *Arguments: probe-id, stopInstructions* Kills the probe according to the optional instructions.
12. activateProbeReporting *Arguments: probe-id, reportingParameters(s)*
   Activates the probes reporting.
13. de-activateProbeReporting *Arguments: probe-id* Deactivates probes.

In Fig. 10, a further detail of a ninth embodiment of the first aspect of the present invention is shown. Here, the inner structure of a monitored element 1099 is depicted. The monitored element 1099 here comprises a monitoring server 1060, which in turn comprises a *request handler* 1061 and a processing and thread management unit 1062. The monitoring server 1060 moreover is connected to a database 1063, which is responsible for ticket and monitoring instance details. The monitored element 1099 furthermore comprises monitoring instances 1070, which are connected to the database 1063 and the monitored server 1060. Also, the monitoring server 1060 and the monitoring instances 1070 are connected to a monitored device 1090 through a fourth interface D. The monitored device is moreover connected to a database 1091 and a probe 1080. The monitoring instance 1070 is also directly connected to the probe 1080 by use of the fourth interface D. The monitoring instances 1070 are set up for producing tickets 1071 by use of a reporting interface.

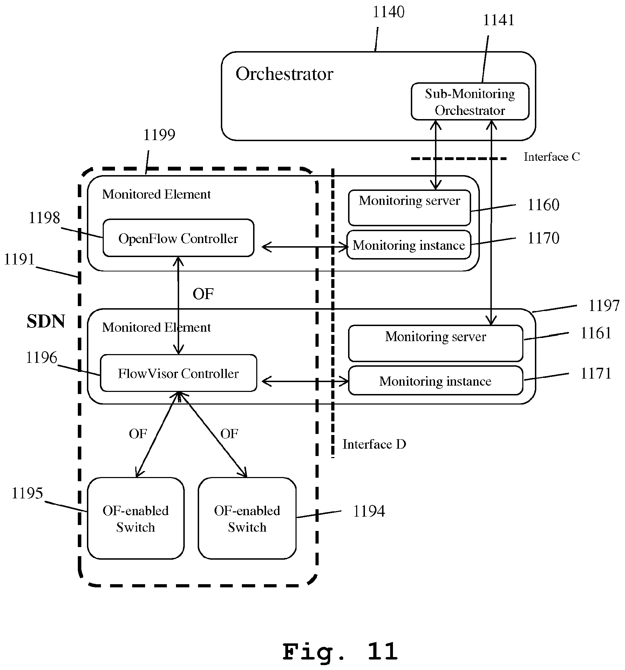

In Fig. 11, a tenth embodiment of the first aspect of the present invention is shown. Only part of a monitoring system is depicted here. An orchestrator 1140, which is for example on the physical infrastructure provider level comprises a sub-monitoring orchestrator 1141. The sub-monitoring orchestrator 1141 is connected through a third interface C to a monitoring server 1160 and a monitoring server 1161. The monitoring server 1160 is part of a monitored element 1199. The monitoring server 1161 is part of a further monitored element 1197. Moreover, the monitoring server 1160 is connected to a monitoring instance 1170, which is also part of the monitored element 1199. The monitored instance 1170 is again connected to an open flow controller 1198 through a fourth interface D. The monitoring server 1161 is moreover connected to a monitoring instance 1171, which is also part of the monitored element 1197. The monitoring instance 1171 is connected to a flow visual controller 1196 through a fourth interface D.

Moreover, the open flow controller 1198 and the flow visual controller 1196 are connected through an open flow interface. The open flow controller 1198 and the flow visual controller 1196 are part of a software defined network. The software defined network 1191 comprises two open flow enabled switches 1194, 1195, which are connected to the flow visual controller 1196 through an open flow interface, each.

The monitoring framework can exploit native features in OF-enabled switches (Open-Flow release 1.1.0) by dispatching flow entries according to monitoring requirements and interrogating the switches to retrieve accurate (real-time) traffic measurements. Open-Flow defines:
- The interface OF between the OpenFlow controller and the switch;
- The interface D between the Monitoring Instances and the OpenFlow Controller (APIs).

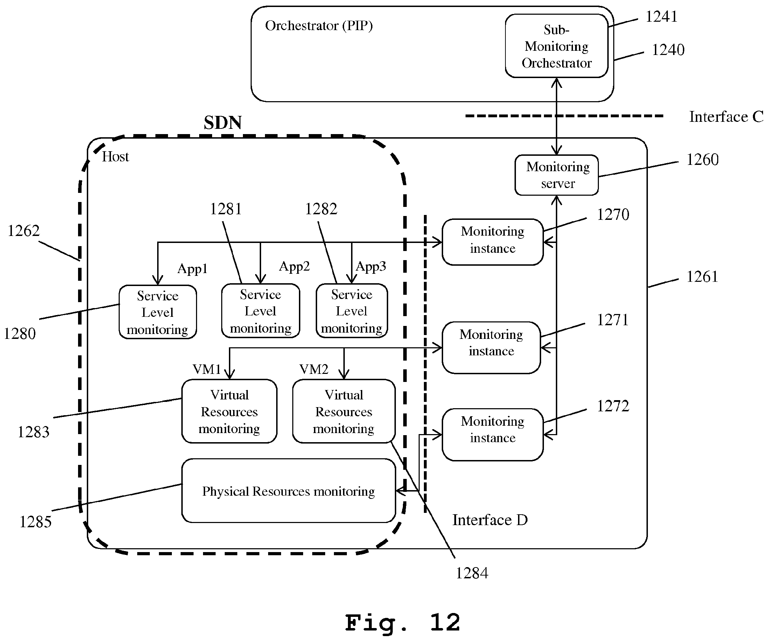

In Fig. 12, an eleventh embodiment of the first aspect of the present invention is depicted. Also here, only part of a monitoring system is shown. The monitoring system comprises an orchestrator on physical infrastructure provider level 1240, which comprises a sub-monitoring orchestrator 1241. Moreover the monitoring system comprises a host 1261, which comprises a monitoring server 1260, which is connected to the sub-monitoring orchestrator 1241. Also, the host 1261 comprises monitoring instances 1270 - 1272, which each are connected to the monitoring server 1260. Moreover, the monitoring instance 1270 is connected to a first service level monitoring probe 1280, a second service level monitoring probe 1281 and a third service level monitoring probe 1282. The monitoring instance 1271 is connected to a first virtual resources monitoring probe 1283 and a second virtual resources monitoring probe 1284. The monitoring instance 1272 is connected to a physical resources monitoring probe 1285.

The service level monitoring probes 1280 - 1282, the virtual resources monitoring probes 1283, 1284 and physical resources monitoring probe 1285 are part of a software defined network 1262.

A monitoring of Data Center as depicted here resources provides:
- Physical resource monitoring (CPU usage, memory usage, and network usage of each Host in the network).
- Virtual resources monitoring: the hypervisor to collect data about each Virtual Machine (VM), collecting data on CPU usage, memory usage, and network usage of each VM.
- Service applications monitoring: for each VM, the running application may embed a probe to monitor the performance of the application environment (e.g. length of the jobs queue).

The proposed monitoring framework includes a Monitoring Instance at Host level to collect the above mentioned measurements and report them to the Sub-Monitoring Orchestrator in the PIP's Orchestrator via Interface C.

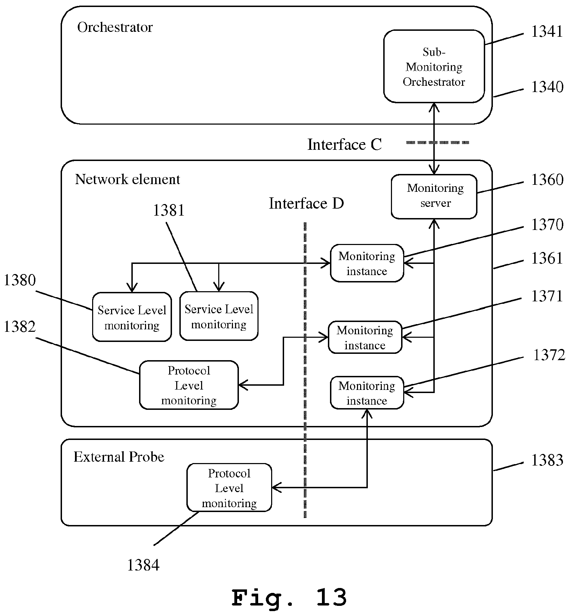

In Fig. 13, a twelfth embodiment of the first aspect of the present invention is depicted. Also here, only part of a monitoring system is shown. The monitoring system comprises an orchestrator 1341, for example on the physical infrastructure provider level, which comprises a sub-monitoring orchestrator 1341. The sub-monitoring orchestrator 1341 is connected to a monitoring server 1360, which is part of a network element 1361. The monitoring server 1360 is moreover connected to monitoring instances 1370 - 1372. The monitoring instance 1370 is connected to a service level monitoring probe 1380 and a second service level monitoring probe 1382. The monitoring instance 1371 is connected to a protocol level monitoring probe 1382. The monitoring instance 1372 is connected to an external probe 1383 which comprises a protocol level monitoring probe 1384. The connection between the monitoring instances 1370 - 1372 to the respective probes 1381-1384 is through a fourth interface D.

Telecom Protocols and Service Modeling are provided as an example. Monitoring instances at Network Element (NE) level, possibly embedded in the NE or provided by external probes. The probes are meant to report Details Records for each protocol and interface:
- Transaction Data Records
- Session Data records

This idea introduces the Interface D between Monitoring Instances and the Probes generating the above mentioned Details Records and Interface C between PIP's Sub-Monitoring Orchestrator and the Monitoring Servers installed in the Network Elements.

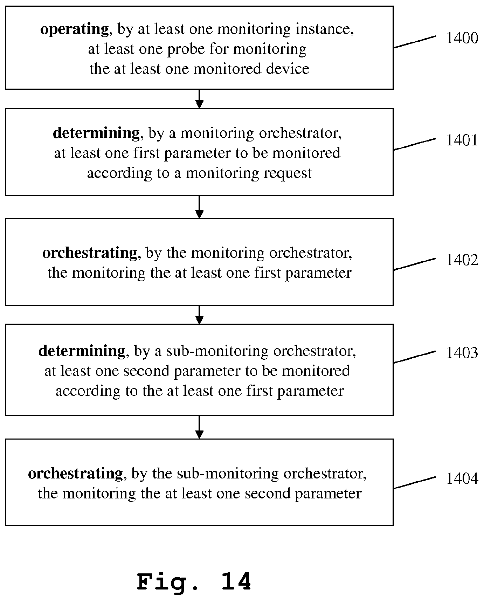

Lastly, in Fig. 14, an embodiment of the third aspect of the present invention is depicted.

The method for monitoring comprises a first step 1400, which comprises operating by at least one monitoring instance, at least one probe from monitoring the at least one monitored device.

In a second step 1401, it is determined, by a monitoring orchestrator, at least one first parameter being monitored according to a monitoring request.

In a third step 1402, the monitoring orchestrator orchestrates the monitoring the at least one first parameter.

In a fourth step 1403, a sub-monitoring orchestrator determines at least one second parameter to be monitored according to the at least one first parameter.

In a fifth step 1404, the sub-monitoring orchestrator orchestrates the monitoring of the at least one second parameter.

The invention has been described in conjunction with various embodiments herein. However, other variations to the enclosed embodiments can be understood and effected by those skilled in the art and practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the internet or other wired or wireless telecommunication systems.

## Claims

1. Monitoring system (100, 300) for a software defined network (190, 1191, 1262), SDN, comprising at least one monitored device (191, 391-396, 1099, 1197, 1199, 1261, 1361),
wherein the monitoring system (100, 300) comprises at least one monitoring instance (104, 370-375, 570, 660, 661, 860, 861, 1070, 1170, 1171, 1270, 1271, 1272, 1370, 1371, 1372),
wherein the at least one monitoring instance (104, 370-375, 570, 660, 661, 860, 861, 1070, 1170, 1171, 1270, 1271, 1272, 1370, 1371, 1372) is a hardware or software monitoring component being connected to and adapted to operate at least one probe (105, 381, 382, 383, 1080, 1383) for monitoring the at least one monitored device (191, 391-396, 1099, 1197, 1199, 1261, 1361),
wherein the monitoring system (100, 300) further comprises a monitoring orchestrator (101, 322, 422, 722, 922) and at least one sub-monitoring orchestrator (102, 332, 342, 352, 432, 532, 632, 732, 735, 832, 932, 935, 1141, 1241, 1341),
wherein the monitoring orchestrator (101, 322, 422, 722, 922) is adapted to determine at least one first parameter to be monitored according to a monitoring request and to orchestrate monitoring the at least one first parameter by sending instructions to the at least one sub-monitoring orchestrator to implement the monitoring requirements, and
wherein the at least one sub-monitoring orchestrator (102, 322, 342, 352, 432, 532, 632, 732, 735, 832, 932, 935, 1141, 1241, 1341) is adapted to determine at least one second parameter to be monitored according to the at least one first parameter and orchestrate monitoring the at least one second parameter; the system further comprising at least one monitoring server (360-375, 570, 660, 661, 860, 861, 1070, 1170, 1171, 1270, 1271, 1272, 1370, 1371, 1372) being adapted to
- determine at least one third parameter to be monitored according to the at least one second parameter, and
- operate the monitoring instances (104, 370-375, 570, 660, 661, 860, 861, 1070, 1170, 1171, 1270, 1271, 1272, 1370, 1371, 1372) for monitoring the at least one third parameter by use of the at least one probe.

2. Monitoring system (100, 300) according to claim 1, wherein the at least one monitored device (191, 391-396, 1099, 1197, 1199, 1261, 1361) is a component of the software defined network (190, 1191, 1262), preferably a radio access network controller or a passive optical network controller or a core network controller or a data center cloud manager server.

3. Monitoring system (100, 300) according to claim 1 or 2, further comprising a monitoring request generator (310) being adapted to send at least one monitoring request to the monitoring orchestrator (101, 322, 422, 722, 922).

4. Monitoring system (100, 300) according to claim 3, further comprising a first interface (A) for
- communicating from the monitoring request generator (310) to the monitoring orchestrator (101, 322, 422, 722, 922) a monitoring request, and
- communicating from the monitoring orchestrator (101, 322, 422, 722, 922) to the monitoring request generator (310) at least one monitored parameter.

5. Monitoring system (100, 300) according to any of the claims 1 to 4,
wherein the monitoring orchestrator (101, 322, 422, 722, 922) is embedded in an orchestrator (320, 420, 720, 920) of the software defined network (190, 1191, 1262) SDN for orchestrating multiple physical infrastructure providers of the said Software defined network (190, 1191, 1262), SDN.

6. Monitoring system (100, 300) according to any of the claims 1 to 5,
further comprising at least one second interface (B) for communication between the monitoring orchestrator (101, 322, 422, 722, 922) and the at least one sub-monitoring orchestrator (102, 322, 342, 352, 432, 532, 632, 732, 735, 832, 932, 935, 1141, 1241, 1341), and
wherein the second interface (B) is adapted to communicate from the monitoring orchestrator (101, 322, 422, 722, 922) to the at least one sub-monitoring orchestrator (102, 322, 342, 352, 432, 532, 632, 732, 735, 832, 932, 935, 1141, 1241, 1341)
- a message for instantiating a probe (105, 381, 382, 383, 1080, 1383) at a specific location, and/or
- a message for starting a new report, and/or
- a message for combining a number of probes (105, 381, 382, 383, 1080, 1383) into one single probe (105, 381, 382, 383, 1080, 1383), and/or
- a message for reconfiguring a probe (105, 381, 382, 383, 1080, 1383), and/or
- a message for configuring an alarm with an alarm condition, and/or
- a message for requesting a report status of a probe (105, 381, 382, 383, 1080, 1383), and/or
- a message for moving a probe (105, 381, 382, 383, 1080, 1383) to a new location, and/or
- a message for authorizing a move of a probe (105, 381, 382, 383, 1080, 1383), which was previously requested, and/or
- a message for accepting a previously requested move of a probe (105, 381, 382, 383, 1080, 1383), and/or
- a message for activating a probe (105, 381, 382, 383, 1080, 1383), and/or
- a message for deactivating a probe (105, 381, 382, 383, 1080, 1383), and/or
- a message for activating probe (105, 381, 382, 383, 1080, 1383) reporting, and/or
- a message for deactivating probe (105, 381, 382, 383, 1080, 1383) reporting, and
wherein the second interface (B) is adapted to communicate from the at least one sub-monitoring orchestrator (102, 322, 342, 352, 432, 532, 632, 732, 735, 832, 932, 935, 1141, 1241, 1341) to the monitoring orchestrator (101, 322, 422, 722, 922)
- a message for raising an alarm in case of a specific alarm condition, and/or
- a message for requesting an authorization for a previously requested move of a probe (105, 381, 382, 383, 1080, 1383), and/or
- a message for requesting a move of a probe (105, 381, 382, 383, 1080, 1383) to a new location.

7. Monitoring system (100, 300) according to any of the claims 1 to 6,
further comprising a third interface (C) for communication between the at least one sub-monitoring orchestrator (102, 322, 342, 352, 432, 532, 632, 732, 735, 832, 932, 935, 1141, 1241, 1341) and the at least one monitoring server (360-375, 570, 660, 661, 860, 861, 1070, 1170, 1171, 1270, 1271, 1272, 1370, 1371, 1372),
wherein the third interface (C) is adapted to communicate from the at least one sub-monitoring orchestrator (102, 322, 342, 352, 432, 532, 632, 732, 735, 832, 932, 935, 1141, 1241, 1341) to the at least one monitoring server (360-375, 570, 660, 661, 860, 861, 1070, 1170, 1171, 1270, 1271, 1272, 1370, 1371, 1372)
- a message for instantiating a probe (105, 381, 382, 383, 1080, 1383) at a specific location, and/or
- a message for starting a new report of a probe (105, 381, 382, 383, 1080, 1383), and/or
- a message for combining a number of probes (105, 381, 382, 383, 1080, 1383) into one single probe (105, 381, 382, 383, 1080, 1383), and/or
- a message for reconfiguring a probe (105, 381, 382, 383, 1080, 1383), and/or
- a message for configuring an alarm with an alarm condition, and/or
- a message for requesting a report of a probe (105, 381, 382, 383, 1080, 1383), and/or
- a message for checking if an intended move of a probe (105, 381, 382, 383, 1080, 1383) is supported, and/or
- a message for moving a probe (105, 381, 382, 383, 1080, 1383) to a new location, and/or
- a message for authorizing a previously requested move request, and/or
- a message for de-instantiating a probe (105, 381, 382, 383, 1080, 1383), and/or
- a message for activating a probe (105, 381, 382, 383, 1080, 1383), and/or
- a message for deactivating a probe (105, 381, 382, 383, 1080, 1383), and/or
- a message for activating probe (105, 381, 382, 383, 1080, 1383) reporting, and/or
- a message for deactivating probe (105, 381, 382, 383, 1080, 1383) reporting, and
wherein the third interface (C) is adapted to communicate from the at least one monitoring server (360-375, 570, 660, 661, 860, 861, 1070, 1170, 1171, 1270, 1271, 1272, 1370, 1371, 1372) to the at least one sub-monitoring orchestrator (102, 322, 342, 352, 432, 532, 632, 732, 735, 832, 932, 935, 1141, 1241, 1341)
- a message for raising an alarm in case of a specific alarm condition, and/or
- a message for requesting an authorization for a previously requested move of a probe (105, 381, 382, 383, 1080, 1383), and/or
- a message for requesting a move of a probe (105, 381, 382, 383, 1080, 1383) to a new location, and/or
- a message for requesting a list of all virtual entities associated to a physical entity, and/or
- a message for requesting a list of all probes (105, 381, 382, 383, 1080, 1383) associated to a physical entity or a virtual entity.

8. Monitoring system (100, 300) according to any of the claims 1 to 7,
further comprising a fourth interface (D) for communication between the at least one monitoring instance (104, 370-375, 570, 660, 661, 860, 861, 1070, 1170, 1171, 1270, 1271, 1272, 1370, 1371, 1372) and the at least one probe (105, 381, 382, 383, 1080, 1383),
wherein the fourth interface (D) is adapted to communicate from the at least one monitoring instance (104, 370-375, 570, 660, 661, 860, 861, 1070, 1170, 1171, 1270, 1271, 1272, 1370, 1371, 1372) to the at least one probe (105, 381, 382, 383, 1080, 1383)
- a message for instantiating the probe (105, 381, 382, 383, 1080, 1383) at a specific location, and/or
- a message for starting a new report of the probe (105, 381, 382, 383, 1080, 1383), and/or
- a message for combining a number of probes (105, 381, 382, 383, 1080, 1383) into one single probe (105, 381, 382, 383, 1080, 1383), and/or
- a message for reconfiguring the probe (105, 381, 382, 383, 1080, 1383), and/or
- a message for checking if an intended move of the probe (105, 381, 382, 383, 1080, 1383) is supported, and/or
- a message for moving the probe (105, 381, 382, 383, 1080, 1383) to a new location, and/or
- a message for de-instantiating the probe (105, 381, 382, 383, 1080, 1383), and/or
- a message for activating the probe (105, 381, 382, 383, 1080, 1383), and/or
- a message for deactivating the probe (105, 381, 382, 383, 1080, 1383), and/or
- a message for activating probe (105, 381, 382, 383, 1080, 1383) reporting, and/or
- a message for deactivating probe (105, 381, 382, 383, 1080, 1383) reporting, and/or
wherein the fourth interface (D) is adapted to communicate from the at least one probe (105, 381, 382, 383, 1080, 1383) to the at least one monitoring instance (104, 370-375, 570, 660, 661, 860, 861, 1070, 1170, 1171, 1270, 1271, 1272, 1370, 1371, 1372)
- a message for requesting a list of all virtual entities associated to a physical entity, and/or
- a message for requesting a list of all probes (105, 381, 382, 383, 1080, 1383) associated to a physical entity or a virtual entity.

9. Monitoring system (100, 300) according to any of the claims 1 to 8,
wherein each monitoring server (360-375, 570, 660, 661, 860, 861, 1070, 1170, 1171, 1270, 1271, 1272, 1370, 1371, 1372) is allocated to or embedded in one monitored device (191, 391-396, 1099, 1197, 1199, 1261, 1361), and/or
each monitoring instance (104, 370-375, 570, 660, 661, 860, 861, 1070, 1170, 1171, 1270, 1271, 1272, 1370, 1371, 1372) is adapted to monitor all parameters to be monitored by at least one probe (105, 381, 382, 383, 1080, 1383) for one monitored device (191, 391-396, 1099, 1197, 1199, 1261, 1361).

10. Monitoring system (100, 300) according to any of the claims 1 to 9,
wherein when the at least one monitored device (191, 391-396, 1099, 1197, 1199, 1261, 1361) is to be reconfigured, a monitoring server (360-375, 570, 660, 661, 860, 861, 1070, 1170, 1171, 1270, 1271, 1272, 1370, 1371, 1372) corresponding to said monitored device (191, 391-396, 1099, 1197, 1199, 1261, 1361) is adapted to reconfigure a probe (105, 381, 382, 383, 1080, 1383) allocated to said monitored device (191, 391-396, 1099, 1197, 1199, 1261, 1361) while the probe (105, 381, 382, 383, 1080, 1383) is active or in operation.

11. Monitoring system (100, 300) according to any of the claims 1 to 9,
wherein when the at least one monitored device (191, 391-396, 1099, 1197, 1199, 1261, 1361) is to be reconfigured, a monitoring server (360-375, 570, 660, 661, 860, 861, 1070, 1170, 1171, 1270, 1271, 1272, 1370, 1371, 1372) corresponding to a probe (105, 381, 382, 383, 1080, 1383) allocated to said monitored device (191, 391-396, 1099, 1197, 1199, 1261, 1361) is adapted to:
- deactivate the probe (105, 381, 382, 383, 1080, 1383),
- reconfigure the probe (105, 381, 382, 383, 1080, 1383), and
- reactivate the probe (105, 381, 382, 383, 1080, 1383).

12. Monitoring system (100, 300) according to any of the claims 1 to 11,
further comprising at least one sub-sub-monitoring orchestrator (102, 322, 342, 352, 432, 532, 632, 732, 735, 832, 932, 935, 1141, 1241, 1341),
wherein the at least one sub-monitoring orchestrator (102, 322, 342, 352, 432, 532, 632, 732, 735, 832, 932, 935, 1141, 1241, 1341) is adapted to orchestrate monitoring of the parameters to be monitored by the at least one sub-sub-monitoring orchestrator (102, 322, 342, 352, 432, 532, 632, 732, 735, 832, 932, 935, 1141, 1241, 1341), and
wherein the at least one sub-sub-monitoring orchestrator (102, 322, 342, 352, 432, 532, 632, 732, 735, 832, 932, 935, 1141, 1241, 1341) is adapted to orchestrate monitoring of the parameters to be monitored by the at least one monitoring server (360-375, 570, 660, 661, 860, 861, 1070, 1170, 1171, 1270, 1271, 1272, 1370, 1371, 1372) .

13. Method for operating a monitoring system (100, 300) for monitoring a software defined network (190, 1191, 1262), SDN, comprising at least one monitored device (191, 391-396, 1099, 1197, 1199, 1261, 1361),
wherein the method comprises the steps of
- operating (1400), by at least one monitoring instance (104, 370-375, 570, 660, 661, 860, 861, 1070, 1170, 1171, 1270, 1271, 1272, 1370, 1371, 1372), at least one probe (105, 381, 382, 383, 1080, 1383) for monitoring the at least one monitored device (191, 391-396, 1099, 1197, 1199, 1261, 1361),
- determining (1401), by a monitoring orchestrator (101, 322, 422, 722, 922), at least one first parameter to be monitored according to a monitoring request;
- orchestrating (1402), by the monitoring orchestrator (101, 322, 422, 722, 922), the monitoring the at least one first parameter by sending instructions to the at least one sub-monitoring orchestrator to implement the monitoring requirements;
- determining (1403), by a sub-monitoring orchestrator (102, 322, 342, 352, 432, 532, 632, 732, 735, 832, 932, 935, 1141, 1241, 1341) (101, 322, 422, 722, 922), at least one second parameter to be monitored according to the at least one first parameter;
- orchestrating (1404), by the sub-monitoring orchestrator (102, 322, 342, 352, 432, 532, 632, 732, 735, 832, 932, 935, 1141, 1241, 1341) (101, 322, 422, 722, 922), the monitoring the at least one second parameter; and
- determining at least one third parameter to be monitored according to the at least one second parameter by the monitoring server and operating the monitoring instances for monitoring the at least one third parameter by the monitoring server.

## Patentansprüche

1. Überwachungssystem (100, 300) für ein softwaredefiniertes Netzwerk (190, 1191, 1262), SDN, umfassend mindestens ein überwachtes Gerät (191, 391-396, 1099, 1197, 1199, 1261, 1361),
wobei das Überwachungssystem (100, 300) mindestens eine Überwachungsinstanz (104, 370-375, 570, 660, 661, 860, 861, 1070, 1170, 1171, 1270, 1271, 1272, 1370, 1371, 1372) umfasst,
wobei die mindestens eine Überwachungsinstanz (104, 370-375, 570, 660, 661, 860, 861, 1070, 1170, 1171, 1270, 1271, 1272, 1370, 1371, 1372) eine Hardware- oder Softwareüberwachungskomponente ist, die mit mindestens einer Sonde (105, 381, 382, 383, 1080, 1383) zum Überwachen des mindestens einen überwachten Geräts (191, 391-396, 1099, 1197, 1199, 1261, 1361) verbunden ist und dazu ausgelegt ist, diese zu betreiben,
wobei das Überwachungssystem (100, 300) ferner einen Überwachungs-Orchestrator (101, 322, 422, 722, 922) und mindestens einen Sub-Überwachungs-Orchestrator (102, 332, 342, 352, 432, 532, 632, 732, 735, 832, 932, 935, 1141, 1241, 1341) umfasst, wobei der Überwachungs-Orchestrator (101, 322, 422, 722, 922) dazu ausgelegt ist, mindestens einen zu überwachenden ersten Parameter gemäß einer Überwachungsanforderung zu bestimmen und ein Überwachen des mindestens einen ersten Parameters durch zu orchestrieren durch Senden von Anweisungen an den mindestens einen Sub-Überwachungs-Orchestrator, um die Überwachungsanforderungen zu implementieren, und wobei der mindestens eine Sub-Überwachungs-Orchestrator (102, 322, 342, 352, 432, 532, 632, 732, 735, 832, 932, 935, 1141, 1241, 1341) dazu ausgelegt ist, mindestens einen zu überwachenden zweiten Parameter gemäß dem mindestens einen ersten Parameter zu bestimmen und ein Überwachen des mindestens einen zweiten Parameters zu orchestrieren; wobei das System ferner mindestens einen Überwachungsserver (360-375, 570, 660, 661, 860, 861, 1070, 1170, 1171, 1270, 1271, 1272, 1370, 1371, 1372) umfasst, der ausgelegt ist zum
- Bestimmen mindestens eines dritten zu überwachenden Parameters gemäß dem mindestens einen zweiten Parameter, und
- Betreiben der Überwachungsinstanzen (104, 370-375, 570, 660, 661, 860, 861, 1070, 1170, 1171, 1270, 1271, 1272, 1370, 1371, 1372), um den mindestens einen dritten Parameter unter Verwendung der mindestens einen Sonde zu überwachen.

2. Überwachungssystem (100, 300) nach Anspruch 1,
wobei das mindestens eine überwachte Gerät (191, 391-396, 1099, 1197, 1199, 1261, 1361) eine Komponente des softwaredefinierten Netzwerks (190, 1191, 1262), vorzugsweise ein Funkzugangsnetzwerkcontroller oder eine passiver Optisches-Netzwerk-Controller oder ein Kernnetzwerkcontroller oder ein Rechenzentrums-Cloud-Verwaltungsserver, ist.

3. Überwachungssystem (100, 300) nach Anspruch 1 oder 2, ferner umfassend einen Überwachungsanforderungsgenerator (310), der dazu ausgelegt ist, mindestens eine Überwachungsanforderung an den Überwachungs-Orchestrator (101, 322, 422, 722, 922) zu senden.

4. Überwachungssystem (100, 300) nach Anspruch 3, ferner umfassend eine erste Schnittstelle (A) zum
- Kommunizieren, von dem Überwachungsanforderungsgenerator (310) an den Überwachungs-Orchestrator (101, 322, 422, 722, 922), einer Überwachungsanforderung, und
- Kommunizieren, von dem Überwachungs-Orchestrator (101, 322, 422, 722, 922) an den Überwachungsanforderungsgenerator (310), mindestens eines überwachten Parameters.

5. Überwachungssystem (100, 300) nach einem der Ansprüche 1 bis 4,
wobei der Überwachungs-Orchestrator (101, 322, 422, 722, 922) in einen Orchestrator (320, 420, 720, 920) des softwaredefinierten Netzwerks (190, 1191, 1262), SDN, zum orchestrieren mehrerer physikalischer Infrastrukturanbieter des softwaredefinierten Netzwerks (190, 1191, 1262), SDN, eingebettet ist.

6. Überwachungssystem (100, 300) nach einem der Ansprüche 1 bis 5,
ferner umfassend mindestens eine zweite Schnittstelle (B) zur Kommunikation zwischen dem Überwachungs-Orchestrator (101, 322, 422, 722, 922) und dem mindestens einen Sub-Überwachungs-Orchestrator (102, 322, 342, 352, 432, 532, 632, 732, 735, 832, 932, 935, 1141, 1241, 1341), und
wobei die zweite Schnittstelle (B) dazu ausgelegt ist, von dem Überwachungs-Orchestrator (101, 322, 422, 722, 922) an den mindestens einen Sub-Überwachungs-Orchestrator (102, 322, 342, 352, 432, 532, 632, 732, 735, 832, 932, 935, 1141, 1241, 1341) zu kommunizieren
- eine Nachricht zum Instanziieren einer Sonde (105, 381, 382, 383, 1080, 1383) an einem bestimmten Ort, und/oder
- eine Nachricht zum Starten eines neuen Berichts, und/oder
- eine Nachricht zum Kombinieren einer Anzahl von Sonden (105, 381, 382, 383, 1080, 1383) zu einer einzelnen Sonde (105, 381, 382, 383, 1080, 1383), und/oder
- eine Nachricht zum Rekonfigurieren einer Sonde (105, 381, 382, 383, 1080, 1383), und/oder
- eine Nachricht zum Konfigurieren eines Alarms mit einer Alarmbedingung, und/oder
- eine Nachricht zum Anfordern eines Berichtsstatus einer Sonde (105, 381, 382, 383, 1080, 1383), und/oder
- eine Nachricht zum Bewegen einer Sonde (105, 381, 382, 383, 1080, 1383) an einen neuen Ort, und/oder
- eine Nachricht zum Autorisieren einer Bewegung einer zuvor angeforderten Sonde (105, 381, 382, 383, 1080, 1383) und/oder
- eine Nachricht zum Annehmen einer zuvor angeforderten Bewegung einer Sonde (105, 381, 382, 383, 1080, 1383), und/oder
- eine Nachricht zum Aktivieren einer Sonde (105, 381, 382, 383, 1080, 1383), und/oder
- eine Nachricht zum Deaktivieren einer Sonde (105, 381, 382, 383, 1080, 1383), und/oder
- eine Nachricht zum Aktivieren einer Sonden- (105, 381, 382, 383, 1080, 1383) Berichterstattung, und/oder
- eine Nachricht zum Deaktivieren der einer Sonden- (105, 381, 382, 383, 1080, 1383) Berichterstattung, und
wobei die zweite Schnittstelle (B) dazu ausgelegt ist, von dem mindestens einen Sub-Überwachungs-Orchestrator (102, 322, 342, 352, 432, 532, 632, 732, 735, 832, 932, 935, 1141, 1241, 1341) an den Überwachungs-Orchestrator (101, 322, 422, 722, 922) zu kommunizieren
- eine Nachricht zum Auslösen eines Alarms im Falle einer bestimmten Alarmbedingung, und/oder
- eine Nachricht zum Anfordern einer Autorisierung für eine zuvor angeforderte Bewegung einer Sonde (105, 381, 382, 383, 1080, 1383), und/oder
- eine Nachricht zum Anfordern einer Bewegung einer Sonde (105, 381, 382, 383, 1080, 1383) an einen neuen Ort.

7. Überwachungssystem (100, 300) nach einem der Ansprüche 1 bis 6,
ferner umfassend eine dritte Schnittstelle (C) zur Kommunikation zwischen dem mindestens einen Sub-Überwachungs-Orchestrator (102, 322, 342, 352, 432, 532, 632, 732, 735, 832, 932, 935, 1141, 1241, 1341) und den mindestens einen Überwachungsserver (360-375, 570, 660, 661, 860, 861, 1070, 1170, 1171, 1270, 1271, 1272, 1370, 1371, 1372),
wobei die dritte Schnittstelle (C) dazu ausgelegt ist, von dem mindestens einen Sub-Überwachungs-Orchestrator (102, 322, 342, 352, 432, 532, 632, 732, 735, 832, 932, 935, 1141, 1241, 1341) an den mindestens einen Überwachungsserver (360-375, 570, 660, 661, 860, 861, 1070, 1170, 1171, 1270, 1271, 1272, 1370, 1371, 1372) zu kommunizieren
- eine Nachricht zum Instanziieren einer Sonde (105, 381, 382, 383, 1080, 1383) an einem bestimmten Ort, und/oder
- eine Nachricht zum Starten eines neuen Berichts einer Sonde (105, 381, 382, 383, 1080, 1383), und/oder
- eine Nachricht zum Kombinieren einer Anzahl von Sonden (105, 381, 382, 383, 1080, 1383) zu einer einzelnen Sonde (105, 381, 382, 383, 1080, 1383), und/oder
- eine Nachricht zum Rekonfigurieren einer Sonde (105, 381, 382, 383, 1080, 1383), und/oder
- eine Nachricht zum Konfigurieren eines Alarms mit einer Alarmbedingung, und/oder
- eine Nachricht zum Anfordern eines Berichts einer Sonde (105, 381, 382, 383, 1080, 1383), und/oder
- eine Nachricht zum Überprüfen, ob eine beabsichtigte Bewegung einer Sonde (105, 381, 382, 383, 1080, 1383) unterstützt wird, und/oder
- eine Nachricht zum Bewegen einer Sonde (105, 381, 382, 383, 1080, 1383) an einen neuen Ort und/oder
- eine Nachricht zum Autorisieren einer zuvor angeforderten Bewegungsanforderung, und/oder
- eine Nachricht zum Deinstanziieren einer Sonde (105, 381, 382, 383, 1080, 1383), und/oder
- eine Nachricht zum Aktivieren einer Sonde (105, 381, 382, 383, 1080, 1383), und/oder
- eine Nachricht zum Deaktivieren einer Sonde (105, 381, 382, 383, 1080, 1383), und/oder
- eine Nachricht zur Aktivierung einer Sonden- (105, 381, 382, 383, 1080, 1383) Berichterstattung, und/oder
- eine Nachricht zum Deaktivieren einer Sonden- (105, 381, 382, 383, 1080, 1383) Berichterstattung, und
wobei die dritte Schnittstelle (C) dazu ausgelegt ist, von dem mindestens einen Überwachungsserver (360-375, 570, 660, 661, 860, 861, 1070, 1170, 1171, 1270, 1271, 1272, 1370, 1371, 1372) an den mindestens einen Sub-Überwachungs-Orchestrator (102, 322, 342, 352, 432, 532, 632, 732, 735, 832, 932, 935, 1141, 1241, 1341) zu kommunizieren
- eine Nachricht zum Auslösen eines Alarms im Falle einer bestimmten Alarmbedingung, und/oder
- eine Nachricht zum Anfordern einer Autorisierung für eine zuvor angeforderte Bewegung einer Sonde (105, 381, 382, 383, 1080, 1383), und/oder
- eine Nachricht zum Anfordern einer Bewegung einer Sonde (105, 381, 382, 383, 1080, 1383) an einen neuen Ort, und/oder
- eine Nachricht zum Anfordern einer Liste aller virtuellen Entitäten, die einer physischen Entität zugeordnet sind, und/oder
- eine Nachricht zum Anfordern einer Liste aller Sonden (105, 381, 382, 383, 1080, 1383), die einer physischen Entität oder einer virtuellen Entität zugeordnet sind.

8. Überwachungssystem (100, 300) nach einem der Ansprüche 1 bis 7,
ferner umfassend eine vierte Schnittstelle (D) zur Kommunikation zwischen der mindestens einen Überwachungsinstanz (104, 370-375, 570, 660, 661, 860, 861, 1070, 1170, 1171, 1270, 1271, 1272, 1370, 1371, 1372) und der mindestens eine Sonde (105, 381, 382, 383, 1080, 1383),
wobei die vierte Schnittstelle (D) dazu ausgelegt ist, von der mindestens einen Überwachungsinstanz (104, 370-375, 570, 660, 661, 860, 861, 1070, 1170, 1171, 1270, 1271, 1272, 1370, 1371, 1372) an die mindestens eine Sonde (105, 381, 382, 383, 1080, 1383) zu kommunizieren
- eine Nachricht zum Instanziieren der Sonde (105, 381, 382, 383, 1080, 1383) an einem bestimmten Ort, und/oder
- eine Nachricht zum Starten eines neuen Berichts der Sonde (105, 381, 382, 383, 1080, 1383), und/oder
- eine Nachricht zum Kombinieren einer Anzahl von Sonden (105, 381, 382, 383, 1080, 1383) zu einer einzelnen Sonde (105, 381, 382, 383, 1080, 1383), und/oder
- eine Nachricht zum Rekonfigurieren der Sonde (105, 381, 382, 383, 1080, 1383), und/oder
- eine Nachricht zur Überprüfung, ob eine beabsichtigte Bewegung der Sonde (105, 381, 382, 383, 1080, 1383) unterstützt wird, und/oder
- eine Nachricht zum Bewegen der Sonde (105, 381, 382, 383, 1080, 1383) an einen neuen Ort, und/oder
- eine Nachricht zum Deinstanziieren der Sonde (105, 381, 382, 383, 1080, 1383), und/oder
- eine Nachricht zum Aktivieren der Sonde (105, 381, 382, 383, 1080, 1383), und/oder
- eine Nachricht zum Deaktivieren der Sonde (105, 381, 382, 383, 1080, 1383), und/oder
- eine Nachricht zur Aktivierung einer Sonden- (105, 381, 382, 383, 1080, 1383) Berichterstattung, und/oder
- eine Nachricht zum Deaktivieren einer Sonden- (105, 381, 382, 383, 1080, 1383) Berichterstattung, und/oder
wobei die vierte Schnittstelle (D) dazu ausgelegt ist, von der mindestens einen Sonde (105, 381, 382, 383, 1080, 1383) an die mindestens eine Überwachungsinstanz (104, 370-375, 570, 660, 661, 860, 861, 1070, 1170, 1171, 1270, 1271, 1272, 1370, 1371, 1372) zu kommunizieren
- eine Nachricht zum Anfordern einer Liste aller virtuellen Entitäten, die einer physischen Entität zugeordnet sind, und/oder
- eine Nachricht zum Anfordern einer Liste aller Sonden (105, 381, 382, 383, 1080, 1383), die einer physischen Entität oder einer virtuellen Entität zugeordnet sind.

9. Überwachungssystem (100, 300) nach einem der Ansprüche 1 bis 8,
wobei jeder Überwachungsserver (360-375, 570, 660, 661, 860, 861, 1070, 1170, 1171, 1270, 1271, 1272, 1370, 1371, 1372) einem überwachten Gerät (191, 391-396, 1099, 1197, 1199, 1261, 1361) zugewiesen oder in dieses eingebettet ist, und/oder jede Überwachungsinstanz (104, 370-375, 570, 660, 661, 860, 861, 1070, 1170, 1171, 1270, 1271, 1272, 1370, 1371, 1372) dazu ausgelegt ist, alle durch mindestens eine Sonde (105, 381, 382, 383, 1080, 1383) zu überwachenden Parameter für ein überwachtes Gerät (191, 391-396, 1099, 1197, 1199, 1261, 1361) zu überwachen.

10. Überwachungssystem (100, 300) nach einem der Ansprüche 1 bis 9,
wobei, wenn das mindestens eine überwachte Gerät (191, 391-396, 1099, 1197, 1199, 1261, 1361) rekonfiguriert werden soll, ein Überwachungsserver (360-375, 570, 660, 661, 860, 861, 1070, 1170, 1171, 1270, 1271, 1272, 1370, 1371, 1372), der dem überwachten Gerät (191, 391-396, 1099, 1197, 1199, 1261, 1361) entspricht, dazu ausgelegt sind, eine Sonde (105, 381, 382, 383, 1080, 1383), die dem überwachten Gerät (191, 391-396, 1099, 1197, 1199, 1261, 1361) zugeordnet sind, zu rekonfigurieren, während die Sonde (105, 381, 382, 383, 1080, 1383) aktiv oder in Betrieb ist.

11. Überwachungssystem (100, 300) nach einem der Ansprüche 1 bis 9,
wobei, wenn das mindestens eine überwachte Gerät (191, 391-396, 1099, 1197, 1199, 1261, 1361) rekonfiguriert werden soll,
einen Überwachungsserver (360-375, 570, 660, 661, 860, 861, 1070, 1170, 1171, 1270, 1271, 1272, 1370, 1371, 1372), der einer Sonde (105, 381, 382, 383, 1080, 1383) entspricht, die dem überwachten Gerät (191, 391-396, 1099, 1197, 1199, 1261, 1361) zugeordnet sind, ausgelegt ist zum:
- Deaktivieren der Sonde (105, 381, 382, 383, 1080, 1383),
- Rekonfigurieren der Sonde (105, 381, 382, 383, 1080, 1383), und
- Reaktivieren Sie die Sonde (105, 381, 382, 383, 1080, 1383).

12. Überwachungssystem (100, 300) nach einem der Ansprüche 1 bis 11,
ferner umfassend mindestens einen Sub-Sub-Überwachungs-Orchestrator (102, 322, 342, 352, 432, 532, 632, 732, 735, 832, 932, 935, 1141, 1241, 1341),
wobei der mindestens eine Sub-Überwachungs-Orchestrator (102, 322, 342, 352, 432, 532, 632, 732, 735, 832, 932, 935, 1141, 1241, 1341) dazu ausgelegt ist, ein Überwachen von durch den mindestens einen Sub-Sub-Überwachungs-Orchestrator (102, 322, 342, 352, 432, 532, 632, 732, 735, 832, 932, 935, 1141, 1241, 1341) zu überwachenden Parametern zu orchestrieren, und wobei der mindestens eine Sub-Sub- Überwachungs-Orchestrator (102, 322, 342, 352, 432, 532, 632, 732, 735, 832, 932, 935, 1141, 1241, 1341) dazu ausgelegt ist, ein Überwachen von durch den mindestens einen Überwachungsserver (360-375, 570, 660, 661, 860, 861, 1070, 1170, 1171, 1270, 1271, 1272, 1370, 1371, 1372) zu überwachenden Parametern zu orchestrieren.

13. Verfahren zum Betrieb eines Überwachungssystems (100, 300) zum Überwachen eines softwaredefinierten Netzwerks (190, 1191, 1262), SDN, umfassend mindestens ein überwachtes Gerät (191, 391-396, 1099, 1197, 1199, 1261, 1361),
wobei das Verfahren die Schritte umfasst
- Betreiben (1400), durch mindestens eine Überwachungsinstanz (104, 370-375, 570, 660, 661, 860, 861, 1070, 1170, 1171, 1270, 1271, 1272, 1370, 1371, 1372), einer Sonde (105, 381, 382, 383, 1080, 1383) zum Überwachen des mindestens einen überwachten Geräts (191, 391-396, 1099, 1197, 1199, 1261, 1361),
- Bestimmen (1401), durch einen Überwachungs-Orchestrator (101, 322, 422, 722, 922), mindestens eines ersten zu überwachenden Parameters gemäß einer Überwachungsanforderung;
- Orchestrieren (1402), durch den Überwachungs-Orchestrator (101, 322, 422, 722, 922), des Überwachens des mindestens einen ersten Parameters durch Senden von Anweisungen an den mindestens einen Sub-Überwachungs-Orchestrator, um die Überwachungsanforderungen zu implementieren;
- Bestimmen (1403), durch einen Sub-Überwachungs-Orchestrator (102, 322, 342, 352, 432, 532, 632, 732, 735, 832, 932, 935, 1141, 1241, 1341) (101, 322, 422, 722, 922), mindestens eines zweiten zu überwachenden Parameters gemäß dem mindestens einen ersten Parameter;
- Orchestrieren (1404), durch den Sub-Überwachungs-Orchestrator (102, 322, 342, 352, 432, 532, 632, 732, 735, 832, 932, 935, 1141, 1241, 1341) (101, 322, 422, 722, 922), des Überwachens des mindestens einen zweiten Parameters; und
- Bestimmen mindestens eines dritten zu überwachenden Parameters gemäß dem mindestens einen zweiten Parameter durch den Überwachungsserver und Betreiben der Überwachungsinstanzen zum Überwachen des mindestens einen dritten Parameters durch den Überwachungsserver.

## Revendications

1. Système de surveillance (100, 300) pour un réseau défini par logiciel (SDN) (190, 1191, 1262) comprenant au moins un dispositif surveillé (191, 391-396, 1099, 1197, 1199, 1261, 1361),
le système de surveillance (100, 300) comprenant au moins une instance de surveillance (104, 370-375, 570, 660, 661, 860, 861, 1070, 1170, 1171, 1270, 1271, 1272, 1370, 1371, 1372),
l'au moins une instance de surveillance (104, 370-375, 570, 660, 661, 860, 861, 1070, 1170, 1171, 1270, 1271, 1272, 1370, 1371, 1372) étant un composant de surveillance matériel ou logiciel connecté à au moins une sonde (105, 381, 382, 383, 1080, 1383) et conçu pour faire fonctionner celle-ci pour surveiller l'au moins un dispositif surveillé (191, 391-396, 1099, 1197, 1199, 1261, 1361),
le système de surveillance (100, 300) comprenant au moins un orchestrateur de surveillance (101, 322, 422, 722, 922) et au moins un sous-orchestrateur de surveillance (102, 332, 342, 352, 432, 532, 632, 732, 735, 832, 932, 935, 1141, 1241, 1341),
l'orchestrateur de surveillance (101, 322, 422, 722, 922) étant conçu pour déterminer au moins un premier paramètre à surveiller selon une demande de surveillance et pour orchestrer la surveillance de l'au moins un premier paramètre en envoyant des instructions à l'au moins un sous-orchestrateur de surveillance pour mettre en œuvre les exigences de surveillance, et
l'au moins un sous-orchestrateur de surveillance (102, 322, 342, 352, 432, 532, 632, 732, 735, 832, 932, 935, 1141, 1241, 1341) étant conçu pour déterminer au moins un deuxième paramètre à surveiller selon l'au moins un premier paramètre et pour orchestrer la surveillance de l'au moins un deuxième paramètre ;
le système comprenant en outre au moins un serveur de surveillance (360-375, 570, 660, 661, 860, 861, 1070, 1170, 1171, 1270, 1271, 1272, 1370, 1371, 1372) conçu pour :
déterminer au moins un troisième paramètre à surveiller selon l'au moins un deuxième paramètre ; et
faire fonctionner les instances de surveillance (104, 370-375, 570, 660, 661, 860, 861, 1070, 1170, 1171, 1270, 1271, 1272, 1370, 1371, 1372) pour surveiller l'au moins un troisième paramètre en utilisant l'au moins une sonde.

2. Système de surveillance (100, 300) selon la revendication 1,
dans lequel l'au moins un dispositif surveillé (191, 391-396, 1099, 1197, 1199, 1261, 1361) est un composant du réseau défini par logiciel (190, 1191, 1262), de préférence un contrôleur de réseau d'accès radio ou un contrôleur de réseau optique passif ou un contrôleur de réseau central ou un serveur de gestionnaire de nuage de centre de données.

3. Système de surveillance (100, 300) selon la revendication 1 ou 2, comprenant en outre un générateur de demande de surveillance (310) conçu pour envoyer au moins une demande de surveillance à l'orchestrateur de surveillance (101, 322, 422, 722, 922).

4. Système de surveillance (100, 300) selon la revendication 3, comprenant en outre une première interface (A) pour :
communiquer une demande de surveillance du générateur de demande de surveillance (310) à l'orchestrateur de surveillance (101, 322, 422, 722, 922); et
communiquer au moins un paramètre surveillé de l'orchestrateur de surveillance (101, 322, 422, 722, 922) au générateur de demande de surveillance (310).

5. Système de surveillance (100, 300) selon l'une quelconque des revendications 1 à 4, dans lequel l'orchestrateur de surveillance (101, 322, 422, 722, 922) est intégré dans un orchestrateur (320, 420, 720, 920) du réseau défini par logiciel (SDN) (190, 1191, 1262) pour orchestrer de multiples fournisseurs d'infrastructure physique dudit réseau défini par logiciel (SDN) (190, 1191, 1262).

6. Système de surveillance (100, 300) selon l'une quelconque des revendications 1 à 5, comprenant en outre au moins une deuxième interface (B) pour une communication entre l'orchestrateur de surveillance (101, 322, 422, 722, 922) et l'au moins un sous-orchestrateur de surveillance (102, 322, 342, 352, 432, 532, 632, 732, 735, 832, 932, 935, 1141, 1241, 1341); et
la deuxième interface (B) étant conçue pour communiquer de l'orchestrateur de surveillance (101, 322, 422, 722, 922) à l'au moins un sous-orchestrateur de surveillance (102, 322, 342, 352, 432, 532, 632, 732, 735, 832, 932, 935, 1141, 1241, 1341) :
un message pour instancier une sonde (105, 381, 382, 383, 1080, 1383) à un emplacement spécifique ; et/ou
un message pour démarrer un nouveau rapport ; et/ou
un message pour combiner un nombre de sondes (105, 381, 382, 383, 1080, 1383) en une seule sonde (105, 381, 382, 383, 1080, 1383) ; et/ou
un message pour reconfigurer une sonde (105, 381, 382, 383, 1080, 1383) ; et/ou
un message pour configurer une alarme avec une condition d'alarme ; et/ou
un message pour demander un statut de rapport d'une sonde (105, 381, 382, 383, 1080, 1383) ; et/ou
un message pour déplacer une sonde (105, 381, 382, 383, 1080, 1383) à un nouvel emplacement ; et/ou
un message pour autoriser un déplacement d'une sonde (105, 381, 382, 383, 1080, 1383) qui a précédemment été demandé ; et/ou
un message pour accepter un déplacement précédemment demandé d'une sonde (105, 381, 382, 383, 1080, 1383) ; et/ou
un message pour activer une sonde (105, 381, 382, 383, 1080, 1383) ; et/ou un message pour désactiver une sonde (105, 381, 382, 383, 1080, 1383) ; et/ou un message pour activer le signalement d'une sonde (105, 381, 382, 383, 1080, 1383) ; et/ou
un message pour désactiver le signalement d'une sonde (105, 381, 382, 383, 1080, 1383) ; et
la deuxième interface (B) étant conçue pour communiquer de l'au moins un sous-orchestrateur de surveillance (102, 322, 342, 352, 432, 532, 632, 732, 735, 832, 932, 935, 1141, 1241, 1341) à l'orchestrateur de surveillance (101, 322, 422, 722, 922) :
un message pour émettre une alarme en cas de condition d'alarme spécifique ; et/ou
un message pour demander une autorisation pour un déplacement précédemment demandé d'une sonde (105, 381, 382, 383, 1080, 1383) ; et/ou
un message pour demander un déplacement d'une sonde (105, 381, 382, 383, 1080, 1383) à un nouvel emplacement.

7. Système de surveillance (100, 300) selon l'une quelconque des revendications 1 à 6, comprenant en outre une troisième interface (C) pour une communication entre l'au moins un sous-orchestrateur de surveillance (102, 322, 342, 352, 432, 532, 632, 732, 735, 832, 932, 935, 1141, 1241, 1341) et l'au moins un serveur de surveillance (360-375, 570, 660, 661, 860, 861, 1070, 1170, 1171, 1270, 1271, 1272, 1370, 1371, 1372),
la troisième interface (C) étant conçue pour communiquer de l'au moins un sous-orchestrateur de surveillance (102, 322, 342, 352, 432, 532, 632, 732, 735, 832, 932, 935, 1141, 1241, 1341) à l'au moins un serveur de surveillance (360-375, 570, 660, 661, 860, 861, 1070, 1170, 1171, 1270, 1271, 1272, 1370, 1371, 1372) :
un message pour instancier une sonde (105, 381, 382, 383, 1080, 1383) à un emplacement spécifique ; et/ou
un message pour démarrer un nouveau rapport d'une sonde (105, 381, 382, 383, 1080, 1383) ; et/ou
un message pour combiner un nombre de sondes (105, 381, 382, 383, 1080, 1383) en une seule sonde (105, 381, 382, 383, 1080, 1383) ; et/ou
un message pour reconfigurer une sonde (105, 381, 382, 383, 1080, 1383) ; et/ou
un message pour configurer une alarme avec une condition d'alarme ; et/ou
un message pour demander un rapport d'une sonde (105, 381, 382, 383, 1080, 1383) ; et/ou
un message pour vérifier si un déplacement visé d'une sonde (105, 381, 382, 383, 1080, 1383) est pris en charge ; et/ou
un message pour déplacer une sonde (105, 381, 382, 383, 1080, 1383) à un nouvel emplacement ; et/ou
un message pour autoriser une demande de déplacement précédemment demandé ; et/ou
un message pour désinstancier une sonde (105, 381, 382, 383, 1080, 1383) ; et/ou
un message pour activer une sonde (105, 381, 382, 383, 1080, 1383) ; et/ou
un message pour désactiver une sonde (105, 381, 382, 383, 1080, 1383) ; et/ou
un message pour activer le signalement d'une sonde (105, 381, 382, 383, 1080, 1383) ; et/ou
un message pour désactiver le signalement d'une sonde (105, 381, 382, 383, 1080, 1383) ; et
la troisième interface (C) étant conçue pour communiquer de l'au moins un serveur de surveillance (360-375, 570, 660, 661, 860, 861, 1070, 1170, 1171, 1270, 1271, 1272, 1370, 1371, 1372) à l'au moins un sous-orchestrateur de surveillance (102, 322, 342, 352, 432, 532, 632, 732, 735, 832, 932, 935, 1141, 1241, 1341) :
un message pour émettre une alarme en cas de condition d'alarme spécifique ; et/ou
un message pour demander une autorisation pour un déplacement précédemment demandé d'une sonde (105, 381, 382, 383, 1080, 1383) ; et/ou
un message pour demander un déplacement d'une sonde (105, 381, 382, 383, 1080, 1383) à un nouvel emplacement ; et/ou
un message pour demander une liste de toutes les entités virtuelles associées à une entité physique ; et/ou
un message pour demander une liste de toutes les sondes (105, 381, 382, 383, 1080, 1383) associées à une entité physique ou à une entité virtuelle.

8. Système de surveillance (100, 300) selon l'une quelconque des revendications 1 à 7, comprenant en outre une quatrième interface (D) pour une communication entre l'au moins une instance de surveillance (104, 370-375, 570, 660, 661, 860, 861, 1070, 1170, 1171, 1270, 1271, 1272, 1370, 1371, 1372) et l'au moins une sonde (105, 381, 382, 383, 1080, 1383),
la quatrième interface (D) étant conçue pour communiquer de l'au moins une instance de surveillance (104, 370-375, 570, 660, 661, 860, 861, 1070, 1170, 1171, 1270, 1271, 1272, 1370, 1371, 1372) à l'au moins une sonde (105, 381, 382, 383, 1080, 1383) :
un message pour instancier la sonde (105, 381, 382, 383, 1080, 1383) à un emplacement spécifique ; et/ou
un message pour démarrer un nouveau rapport de la sonde (105, 381, 382, 383, 1080, 1383) ; et/ou
un message pour combiner un nombre de sondes (105, 381, 382, 383, 1080, 1383) en une seule sonde (105, 381, 382, 383, 1080, 1383) ; et/ou
un message pour reconfigurer la sonde (105, 381, 382, 383, 1080, 1383) ; et/ou
un message pour vérifier si un déplacement visé de la sonde (105, 381, 382, 383, 1080, 1383) est pris en charge ; et/ou
un message pour déplacer la sonde (105, 381, 382, 383, 1080, 1383) à un nouvel emplacement ; et/ou
un message pour désinstancier la sonde (105, 381, 382, 383, 1080, 1383) ; et/ou
un message pour activer la sonde (105, 381, 382, 383, 1080, 1383) ; et/ou
un message pour désactiver la sonde (105, 381, 382, 383, 1080, 1383) ; et/ou
un message pour activer le signalement d'une sonde (105, 381, 382, 383, 1080, 1383) ; et/ou
un message pour désactiver le signalement d'une sonde (105, 381, 382, 383, 1080, 1383) ; et/ou
la quatrième interface (D) étant conçue pour communiquer de l'au moins une sonde (105, 381, 382, 383, 1080, 1383) à l'au moins une instance de surveillance (104, 370-375, 570, 660, 661, 860, 861, 1070, 1170, 1171, 1270, 1271, 1272, 1370, 1371, 1372) :
un message pour demander une liste de toutes les entités virtuelles associées à une entité physique ; et/ou
un message pour demander une liste de toutes les sondes (105, 381, 382, 383, 1080, 1383) associées à une entité physique ou à une entité virtuelle.

9. Système de surveillance (100, 300) selon l'une quelconque des revendications 1 à 8, dans lequel chaque serveur de surveillance (360-375, 570, 660, 661, 860, 861, 1070, 1170, 1171, 1270, 1271, 1272, 1370, 1371, 1372) est affecté à un dispositif surveillé (191, 391-396, 1099, 1197, 1199, 1261, 1361) ou intégré dans celui-ci, et/ou chaque instance de surveillance (104, 370-375, 570, 660, 661, 860, 861, 1070, 1170, 1171, 1270, 1271, 1272, 1370, 1371, 1372) est conçue pour surveiller tous les paramètres à surveiller par au moins une sonde (105, 381, 382, 383, 1080, 1383) pour un dispositif surveillé (191, 391-396, 1099, 1197, 1199, 1261, 1361).

10. Système de surveillance (100, 300) selon l'une quelconque des revendications 1 à 9, dans lequel, quand l'au moins un dispositif surveillé (191, 391-396, 1099, 1197, 1199, 1261, 1361) doit être reconfiguré, un serveur de surveillance (360-375, 570, 660, 661, 860, 861, 1070, 1170, 1171, 1270, 1271, 1272, 1370, 1371, 1372) correspondant audit dispositif surveillé (191, 391-396, 1099, 1197, 1199, 1261, 1361) est conçu pour reconfigurer une sonde (105, 381, 382, 383, 1080, 1383) affectée audit dispositif surveillé (191, 391-396, 1099, 1197, 1199, 1261, 1361) pendant que la sonde (105, 381, 382, 383, 1080, 1383) est active ou en fonctionnement.

11. Système de surveillance (100, 300) selon l'une quelconque des revendications 1 à 9, dans lequel, quand l'au moins un dispositif surveillé (191, 391-396, 1099, 1197, 1199, 1261, 1361) doit être reconfiguré, un serveur de surveillance (360-375, 570, 660, 661, 860, 861, 1070, 1170, 1171, 1270, 1271, 1272, 1370, 1371, 1372) correspondant à une sonde (105, 381, 382, 383, 1080, 1383) affectée audit dispositif surveillé (191, 391-396, 1099, 1197, 1199, 1261, 1361) est conçu pour :
désactiver la sonde (105, 381, 382, 383, 1080, 1383) ;
reconfigurer la sonde (105, 381, 382, 383, 1080, 1383) ; et
réactiver la sonde (105, 381, 382, 383, 1080, 1383).

12. Système de surveillance (100, 300) selon l'une quelconque des revendications 1 à 11, comprenant en outre au moins un sous-sous-orchestrateur de surveillance (102, 322, 342, 352, 432, 532, 632, 732, 735, 832, 932, 935, 1141, 1241, 1341),
l'au moins un sous-orchestrateur de surveillance (102, 322, 342, 352, 432, 532, 632, 732, 735, 832, 932, 935, 1141, 1241, 1341) étant conçu pour orchestrer la surveillance des paramètres à surveiller par l'au moins un sous-sous-orchestrateur de surveillance (102, 322, 342, 352, 432, 532, 632, 732, 735, 832, 932, 935, 1141, 1241, 1341), et
l'au moins un sous-sous-orchestrateur de surveillance (102, 322, 342, 352, 432, 532, 632, 732, 735, 832, 932, 935, 1141, 1241, 1341) étant conçu pour orchestrer la surveillance des paramètres à surveiller par l'au moins un serveur de surveillance (360-375, 570, 660, 661, 860, 861, 1070, 1170, 1171, 1270, 1271, 1272, 1370, 1371, 1372).

13. Procédé de fonctionnement d'un système de surveillance (100, 300) pour la surveillance d'un réseau défini par logiciel (SDN) (190, 1191, 1262) comprenant au moins un dispositif surveillé (191, 391-396, 1099, 1197, 1199, 1261, 1361), le procédé comprenant les étapes consistant à :
faire fonctionner (1400), par au moins une instance de surveillance (104, 370-375, 570, 660, 661, 860, 861, 1070, 1170, 1171, 1270, 1271, 1272, 1370, 1371, 1372), au moins une sonde (105, 381, 382, 383, 1080, 1383) pour surveiller l'au moins un dispositif surveillé (191, 391-396, 1099, 1197, 1199, 1261, 1361) ;
déterminer (1401), par un orchestrateur de surveillance (101, 322, 422, 722, 922), au moins un premier paramètre à surveiller selon une demande de surveillance ;
orchestrer (1402), par l'orchestrateur de surveillance (101, 322, 422, 722, 922), la surveillance de l'au moins un premier paramètre en envoyant des instructions à l'au moins sous-orchestrateur de surveillance pour mettre en œuvre les exigences de surveillance ;
déterminer (1403), par un sous-orchestrateur de surveillance (102, 322, 342, 352, 432, 532, 632, 732, 735, 832, 932, 935, 1141, 1241, 1341) (101, 322, 422, 722, 922), au moins un deuxième paramètre à surveiller selon l'au moins un premier paramètre ;
orchestrer (1404), par le sous-orchestrateur de surveillance (102, 322, 342, 352, 432, 532, 632, 732, 735, 832, 932, 935, 1141, 1241, 1341) (101, 322, 422, 722, 922), la surveillance de l'au moins un deuxième paramètre ; et
déterminer au moins un troisième paramètre à surveiller selon l'au moins un deuxième paramètre par le serveur de surveillance, et faire fonctionner les instances de surveillance pour surveiller l'au moins un troisième paramètre par le serveur de surveillance.
